(19) Europäisches Patentamt
European Patent Office
Office européen des brevets

(11) Veröffentlichungsnummer: **0 074 335**
**B1**

# (12) EUROPÄISCHE PATENTSCHRIFT

(45) Veröffentlichungstag der Patentschrift: **27.11.85**

(21) Anmeldenummer: **82810360.6**

(22) Anmeldetag: **30.08.82**

(51) Int. Cl.⁴: **A 01 N 25/02**, A 01 N 53/00, D 06 M 16/00 // (A01N53/00, 43:54)

## (54) Lagerstabile Mottenschutzformulierungen.

(30) Priorität: **03.09.81 CH 5686/81**

(43) Veröffentlichungstag der Anmeldung: **16.03.83 Patentblatt 83/11**

(45) Bekanntmachung des Hinweises auf die Patenterteilung: **27.11.85 Patentblatt 85/48**

(84) Benannte Vertragsstaaten: **BE CH DE FR GB IT LI NL**

(56) Entgegenhaltungen: **DE - A - 2 936 457**

(73) Patentinhaber: **CIBA-GEIGY AG, Postfach, CH-4002 Basel (CH)**

(72) Erfinder: **Becker, Carl, Dr., Faldostrasse 9, CH-4059 Basel (CH)**
Erfinder: **Heizler, Fritz, Schorenweg 20/11, CH-4058 Basel (CH)**

EP 0 074 335 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft eine lagerstabile Formulierung eines Mottenschutzmittels sowie ein Verfahren zur Motten- und Käferechtausrüstung von Keratinmaterial unter Verwendung der genannten Formulierung.

Aus der DE-OS 2 936 457 ist bekannt, dass 5-Phenylcarbamoylbarbitursäureverbindungen sehr gute Wirkung gegen Keratinschädlinge zeigen. Besonders gut eignen sich Kombinationen aus diesen 5-Phenylcarbamoylbarbitursäureverbindungen und synthetischen Pyrethroiden zur Ausrüstung von Keratinmaterial, insbesondere von Wolle, Pelzen und Federn, gegen den Befall durch keratinfressende Larven, beispielsweise gegen die Larven der Kleidermotte (Tineola bisselliella), der Pelzmotte (Tinea pellionella), der Samenmotte (Hofmannphila pseudopretella), des Pelzkäfers (Attagenus piceus) und des Teppichkäfers (Anthrenus vorax). Werden Kombinationen der genannten Wirkstoffe z.B. in üblicher Weise auf Wollartikel appliziert, so sind letztere in hervorragender Weise gegen die genannten Schädlinge geschützt. Trotz der bekannten hervorragenden Eigenschaften der genannten Wirkstoffkombination war es bisher nicht möglich, ein entsprechendes Mottenschutzmittel auf den Markt zu bringen, da bislang keine Formulierung der Wirkstoffe gefunden wurde, die eine ausreichende Lagerstabilität aufweist, die mit Wasser problemlos zu einem Applikationsbad verdünnbar ist und die allen übrigen Forderungen von derartigen Formulierungen entspricht (siehe unten). Ein besonderes Problem stellte dabei die ausserordentlich geringe Wasserlöslichkeit der Barbitursäurekomponente dar.

Aufgabe der vorliegenden Erfindung war es nun, eine Formulierung für ein Mottenschutz-Kombinationspräparat aus einer 5-Phenylcarbamoylbarbitursäure-Komponente und einer Pyrethroid-Komponente zu finden, welche Formulierung über einen längeren Zeitraum lagerstabil bleiben (d.h. ohne dass Ausfällungs- oder Entmischungsvorgänge auftreten), möglichst farblos und mit Wasser mischbar sein soll. Die gesuchte Formulierung sollte ferner bei der Applikation auf Wolle Griff, Nuance und Farbechtheit derselben nicht negativ beeinflussen, sollte in klassischen Kontinue-Färbe- und Nachbehandlungsverfahren einsetzbar und gemeinsam mit üblichen Textilbehandlungsmitteln (z.B. Wollegalisiermitteln) ohne negative Beeinflussung derselben verwendbar sein und sollte geringe Toxizität und gute Abbaubarkeit besitzen.

Es wurde nun überraschenderweise gefunden, dass eine Formulierung mit allen notwendigen Eigenschaften erhalten werden kann, wenn man die beiden Wirkstoffkomponenten mit bestimmten aliphatischen Stickstoffverbindungen mischt, gegebenenfalls unter Mitverwendung eines organischen Lösungsmittels, von Wasser, von Tensiden und/oder Emulgatoren bzw. Dispergatoren.

Die erfindungsgemässe lagerstabile Mottenschutzformulierung ist dadurch gekennzeichnet, dass sie folgende Bestandteile enthält:

A. 0,5-20 Gew.-% einer 5-Phenylcarbamoylbarbitursäureverbindung der allgemeinen Formel

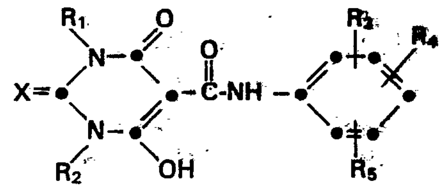

(1)

worin

X Sauerstoff oder Schwefel,

$R_1$ und $R_2$ unabhängig voneinander jeweils Alkyl mit 1 bis 4 C-Atomen, Alkenyl mit 3 oder 4 C-Atomen, Benzyl oder gegebenenfalls substituiertes Phenyl,

$R_3$ Halogen, Nitro oder -C(Halogen)$_3$,

$R_4$ Wasserstoff, Halogen oder -C(Halogen)$_3$ und

$R_5$ Wasserstoff, Halogen, Methyl oder Methoxy

bedeuten, oder deren tautomeren Formen und deren Salzen,

B. 0,5-20 Gew.-% eines synthetischen Pyrethroids der allgemeinen Formel

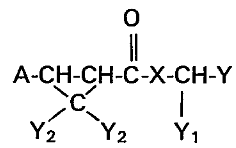

(2)

worin

A $Br_2C=CBr-$, (H, Cl)-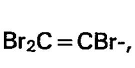-CH=CH-, Cl-C≡C-,

Cl-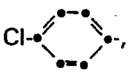-, $(CH_3)_3C-O-$, 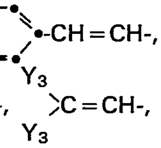, worin $Y_3$ für Cl, Br, $CF_3$, F oder Methyl steht, $CH_2=CH-CH_2-O-$ oder 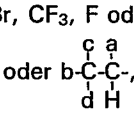, worin a, b, d und d unabhängig voneinander für Cl, Br oder F stehen, wobei c und d auch für Methyl stehen können,

X Sauerstoff oder Schwefel, $Y_1$ Wasserstoff, CN, $CH_3$, $C_2H_5$, i-$C_3H_7$, 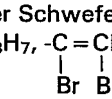, -C≡CH, -C≡C-$CH_3$, -C≡C-$C_6H_5$, -CH=CH-$CH_3$, -$CH_2$-CH=$CH_2$, -CH=$CH_2$ oder -$CH_2$-CH=CHCl,

$Y_2$ Methyl oder beide $Y_2$ zusammen die Ergänzung zu einem Cyclopropan-, Cyclobutan- oder Cyclopentanring und

Y 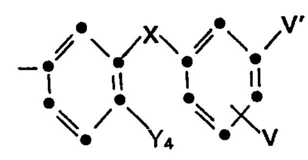

worin $Y_4$ für Wasserstoff oder Fluor, V für Wasserstoff, Cl, Br, F, $CH_3$ oder $NO_2$ oder V' für $CF_3$ steht, wenn V Wasserstoff bedeutet, und X wie oben definiert ist; ferner Y

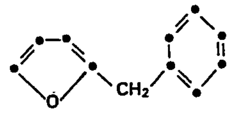, 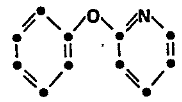, 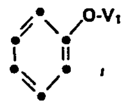,

worin $V_1$ für $-CH_2-CH=CH_2$, $-CH_2-C\equiv CH$, $-CH_2-CH=CH-CH_3$, $-CH_2-$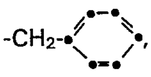, -CH=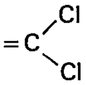, -CF==CFCl oder $-CF=CF_2$ steht; -CBr=CH-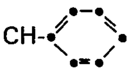 oder CH=CCl-$CH_2$-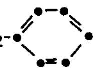bedeuten,

C. 1-90 Gew.-% eines oder mehrerer aliphatischen(r), cycloaliphatischen(r) oder cyclischen(r) Amins(e) oder/und Amids(e) und deren Derivat(e), wobei nicht substituierte acyclische Amine und Amide mindestens einen Kohlenwasserstoffrest mit 8 bis 22 C-Atomen enthalten,

D. 0-80 Gew.-% eines oder mehrerer organischen(r) Lösungsmittel(s),

E. 0-40 Gew.-% Wasser, sofern ein organisches Lösungsmittel gemäss D vorhanden und mit Wasser mischbar ist,

F. 0-30 Gew.-% eines oder mehrerer Tensids(e) und/oder Emulgators(en) bzw. Dispergators(en), die von der Komponente C verschieden sind, und

G. 0-10 Gew.-% einer oder mehrerer aliphatischen(r) Carbonsäure(n).

Erfindungsgemässe Formulierungen enthalten (die Prozentangaben sind Gewichtsprozente, jeweils bezogen auf die Gesamtformulierung):

vorzugsweise 1-15, z.B. 1-10, insbesondere 4-6% der Komponente A,
vorzugsweise 1-15, z.B. 1-10, insbesondere 4-6% der Komponente B,
vorzugsweise 5-60, insbesondere 10-50, z.B. 15-35% der Komponente C,
vorzugsweise 10-80, insbesondere 15-75% der Komponente D,
0-40% der Komponente E,
beispielsweise 5-15% der Komponente F, und
beispielsweise 1-5% de Komponente G.

Das Mischungsverhältnis der beiden Wirkstoffkomponenten A und B kann beispielsweise zwischen 1 : 4 und 4 : 1, vorzugsweise zwischen 1 : 2 und 2 : 1, liegen. In besonders bevorzugten Formulierungen beträgt dieses Verhältnis etwa um 1 : 1.

Die Menge der in der Formulierung enthaltenen stickstoffhaltigen Komponente C hängt primär von der Menge der Komponente A ab. Das Mengenverhältnis A : C kann beispielsweise zwischen 1 : 0,2 und 1 : 20 liegen, insbesondere etwa zwischen 1 : 1 und 1 : 8, vorzugsweise zwischen 1 : 1 und 1 : 6, z.B. zwischen 1 : 3 und 1 : 5.

Die Menge der Komponente D (organisches Lösungsmittel) hängt, falls die Formulierung ein solches enthält, von der Menge an Komponente C, von der Art des Lösungsmittels sowie davon ab, ob die Formulierung auch Wasser enthält (falls das Lösungsmittel mit Wasser mischbar ist).

In vorstehender Formel (1), die die möglichen Wirkstoffkomponenten A umfasst, sind jene bevorzugt, in denen X Sauerstoff bedeutet. Ist in Formel (1) ein Phenylrest $R_1$ bzw. $R_2$ substituiert, so trägt er vorzugsweise ein bis drei Substituenten aus der Gruppe Alkyl oder Alkoxy mit jeweils 1 bis 4 C-Atomen, Chlor, Brom, Fluor, Nitro oder -C(Halogen)$_3$, jedoch höchstens eine Nitrogruppe und höchstens zwei -C(Halogen)$_3$- und Alkoxygruppen. Unter «Halogen» sind alle Halogene, vorzugsweise aber Chlor, Brom oder Fluor zu verstehen.

Besonders vorteilhaft werden als Komponente A Verbindungen der allgemeinen Formel

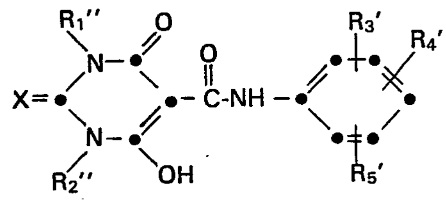 (3)

sowie deren tautomere Formen und Salze verwendet, wobei

X Sauerstoff oder Schwefel,

$R_1''$ und $R_2''$ unabhängig voneinander jeweils Methyl, Äthyl, Allyl oder eine Gruppe der Formel

$Z_1'$ 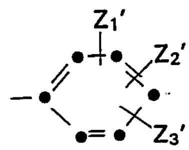

$Z_1'$ für Wasserstoff, Chlor, Brom, Methyl, Methoxy, Äthoxy, $-CF_3$ oder Nitro,
$Z_2'$ für Wasserstoff, Chlor, Brom, Methyl oder $-CF_3$ und
$Z_3'$ für Wasserstoff, Chlor oder Methyl stehen,
$R_3'$ Chlor, Brom oder $-CF_3$,
$R_4'$ Wasserstoff, Chlor oder Brom und
$R_5'$ Wasserstoff, Chlor, Brom, Methyl oder Methoxy bedeuten.

Bevorzugt im Rahmen der Formel (3) sind jene Verbindungen, in denen $R_1''$ und $R_2''$ gleich sind, insbesondere solche, in denen $R_1''$ und $R_2''$ Methyl, $R_3'$ $CF_3$, Cl oder Br, $R_4'$ Cl oder H und $R_5'$ H und X Sauerstoff bedeuten.

Die Verbindungen der Formel (1) bzw. (3) liegen in verschiedenen tautomeren Formen vor (Keto-Enol-Tautomerie). Mögliche Grenzstrukturen sind in der DE-OS 2 936 457 angeführt. In den erfindungsgemässen Formulierungen kann jede der möglichen tautomeren Formen verwendet werden.

Die Wirkstoffe der Formel (1) bzw. (3) können auch in Form ihrer Salze eingesetzt werden. Unter den Salzen sind die Alkalimetall-, Ammonium- oder Aminsalze besonders zu erwähnen, wobei Natrium-, Kalium-, Ammonium- oder Alkylamin-, insbesondere Triäthylaminsalze bevorzugt sind.

Als bevorzugte Wirkstoffkomponenten B können solche der oben definierten Formel (2) eingesetzt werden, worin A einen Rest der Formel

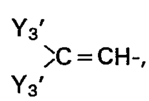

worin $Y_3'$ für Br, Cl oder $CH_3$ steht, X Sauerstoff und Y

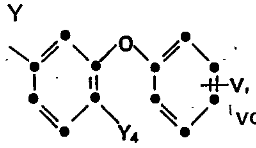, vorzugsweise 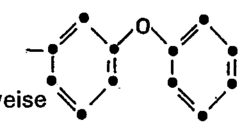

bedeutet. $Y_2$ bedeutet in Formel (2) vorzugsweise $CH_3$ und $Y_1$ Wasserstoff, CN, $CH_3$, $-CH=CH_2$ oder $-C\equiv CH$, insbesondere Wasserstoff oder CN.

In praktisch wichtigen Formulierungen ist die Komponente B eine Verbindung aus der Klasse der 3-(2',2'-Dihalogenvinyl)-2,2-dimethylcyclopropan-carbonsäure-3''-phenoxybenzylester, insbesondere eine der beiden Verbindungen

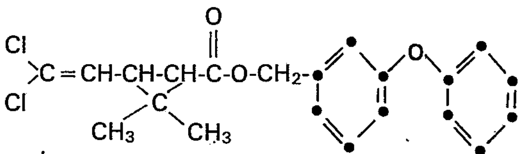 (4)

und

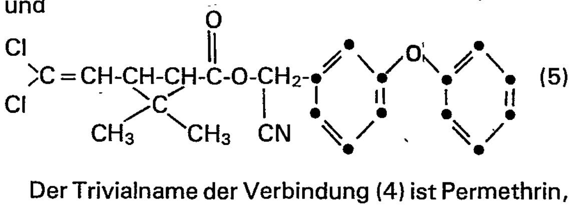 (5)

Der Trivialname der Verbindung (4) ist Permethrin, jener der Verbindung (5) Cypermethrin. Diese beiden Bezeichnungen werden in der Folge verwendet.

Komponente C in den erfindungsgemässen Formulierungen ist ein aliphatisches oder cycloaliphatisches Amin oder Amid, oder ein Derivat von solchen Verbindungen. Es können auch mehrere der genannten Stickstoffverbindungen in der Formulierung vorhanden sein.

Beispiele für als Komponente C einsatzbare Verbindungen sind unter anderen: Primäre, sekundäre oder tertiäre aliphatische, gesättigte oder ungesättigte acyclische der cyclische Amine; Quaternierungsprodukte der genannten tertiären Amine; Aminoxide; Alkoxylierungsprodukte der vorstehend genannten Amine einschliesslich Umsetzungsprodukte dieser alkoxylierten Amine mit verschiedenen Säuren (Ester); Aminoalkohole und deren Alkoxylierungsprodukte; Alkyl-propylendiamine; Amide von Carbonsäuren und Alkoxylierungsprodukte solcher Amide; alkoxylierte Carbonsäurealkylolamide.

Die genannten acyclischen Amine und Amide und deren Derivate (insbesondere Alkoxylierungsprodukte) haben vorzugsweise mindestens eine längere Kohlenwasserstoffkette, z.B. eine solche mit 8 bis 22, insbesondere 10 bis 20, vor allem 10 bis 18 C-Atomen. Die genannten Amine und Aminoxide stellen also vorzugsweise Fettamine und deren Oxide dar bzw. die Amide leiten sich von Fettsäuren ab. Beispiele für primäre Amine sind: Decylamin, Laurylamin, Cocoylamin, Talgfettamin, Octadecylamin, Oleylamin; für sekundäre Amine: $C_1$-$C_4$-Alkyl-Fettamine, z.B. Methyl- oder Äthyllaurylamin, Äthyl- oder Methylcocoylamin, Methyl- oder Äthyltalgfettamin; für tertiäre Amine: Dimethyl- oder Diäthyllaurylamin , Dimethyl- oder Diäthylcocoylamin, Dimethyl- oder Diäthyltalgfettamin; für quaternierte Amine: Quaternierungsprodukte der letztgenannten tertiären Amine, z.B. mit Dimethylsulfat oder Methyljodid; für Aminoxide: die durch bekannte Oxidation aus den vorstehend genannen primären, sekundären und tertiären Aminen erhaltenen Aminoxide. Beispiele für Fettsäureamide sind etwa Lauryl-, Kokosfettsäure-, Talgfettsäure- und andere Fettsäureamide. Diese Amide können mit einem Alkylenoxid zu den entsprechenden alkoxylierten Fettsäureamiden umgesetzt werden. Aminoalkohole und deren Umsetzungsprodukte mit Alkylenoxiden enthalten ebenfalls eine längere Kohlenwasserstoffkette mit den oben genannten Kettenlängen. Unter den vorstehend genannten Alkoxylierungsprodukten sind Propoxylierungs- und insbesondere Äthoxylierungsprodukte bevorzugt.

Von den in den erfindungsgemässen Formulierungen einsetzbaren cyclischen primären, sekundären oder tertiären Aminen kommen z.B. solche auf Basis von Pyrrolidin, Pyrrolin, Pyrazolin, Pyrazolidin, Imidazolin, Imidazolidin, Piperidin, Piperazin in Betracht. Bevorzugt sind auch diese cyclischen Amine noch mit einem langkettigen Kohlenwasserstoffrest (enthaltend 8-22, insbesondere 10-18, C-Atome) substituiert. Beispiele für solche Amine sind etwa 1-Alkyl($C_1$-$C_4$)-2-alkyl- bzw. -alkenyl($C_8$-$C_{22}$)-imidazolin, wobei der Niederalkylrest gegebenenfalls noch substituiert sein kann, etwa durch Hydroxy.

Als Alkoxylierungsprodukte von Fettaminen kommen beispielsweise solche der Formel

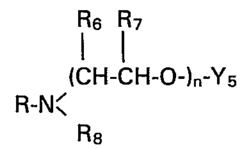 (6)

in Betracht, in der

R einen $C_8$-$C_{22}$-Alkyl- oder Alkenylrest,

$R_6$ und $R_7$ unabhängig voneinander Wasserstoff oder eine Methylgruppe,

n eine Zahl von 1-100, vorzugsweise eine Zahl von 1-30,

$Y_5$ Wasserstoff oder den Rest einer Säure, etwa von Phosphorsäure oder von Schwefelsäure, beispielsweise eine $-SO_3M$-Gruppe, in der M für Wasserstoff, ein Alkalimetall- oder Ammoniumion steht,

$R_8$ Wasserstoff, einen $C_1$-$C_4$-Alkylrest, die Gruppierung

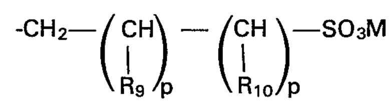

in der $R_9$ und $R_{10}$ unabhängig voneinander für Wasserstoff oder eine Hydroxygruppe stehen, und die Summe p + q eine Zahl von 1-3 ist, oder die Gruppierung

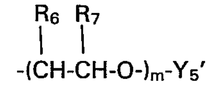

bedeuten, worin $Y_5'$ wie $Y_5$ definiert ist, wobei $Y_5$ und $Y_5'$ auch gemeinsam den Rest einer Säure, z.B. der Phosphorsäure, bedeutet können, und worin m wie n definiert ist und die Summe n + m vorzugsweise 2 bis 50, insbesondere 2 bis 30, beträgt, sowie deren Quaternierungsprodukte für den Fall, dass $R_8$ nicht für Wasserstoff steht.

Die Quaternierungsprodukte können in bekannter Weise aus den nicht quaternierten Verbindungen

der Formel (6) durch Umsetzung mit den üblichen Quaternierungsmitteln erhalten werden. Diese Quaternierungsprodukte entsprechen etwa der Formel

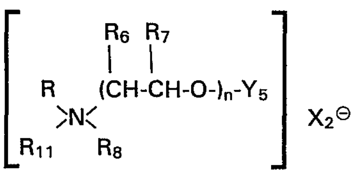

(7)

worin R, $R_6$, $R_7$, $R_8$, n und $Y_5$ wie in Formel (6) definiert sind und $R_{11}$ eine gegenebenfalls durch eine Hydroxy- oder Carbonamidgruppe substituierte $C_1$-$C_8$-Alkylgruppe, einen Benzylrest oder die Gruppierung

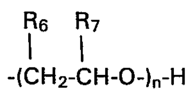

worin $R_6$ und $R_7$ wie vorstehend definiert sind und $X_2^{\ominus}$ ein Anion bedeuten.

Für R seien als $C_8$-$C_{22}$-Alkylreste beispielsweise oder Dodecyl-, Tetradecyl-, Hexadecyl-, Octadecyl-, Tallyl-, Cocoyl- und der Docosylrest, als $C_8$-$C_{22}$-Alkenylreste der Tetradecenyl-, Hexadecenyl-, Oleyl- und Octadecenylrest genannt.

Für M kommen als Alkalimetallatome insbesondere das Natrium- oder Kaliumatom und als Ammoniumgruppe die Ammoniumgruppe selbst und die sich vom Mono-, Di- oder Triäthanolamin ableitenden Ammoniumgruppen in Betracht.

Für $R_{11}$ seien als gegebenenfalls durch eine Hydroxy- oder eine Carbonamidgruppe substituierte $C_1$-$C_8$-Alkylreste beispielsweise der Methyl-, Äthyl-, i-Propyl-, sec.-Butylrest, die Carbonamidomethyl-, 2-Hydroxyäthyl- und die 1-Hydroxypropyl-(2)--Gruppe genannt.

Als Anion $X_2^{\ominus}$ kommen insbesondere Halogenidionen, wie das Chlorid-, Bromid-, Jodidion, die Anionen saurer Alkylschwefelsäureester, wie das Methylsulfat- und Äthylsulfation, und das Toluolsulfonsäureion in Betracht.

Im Rahmen der Formel (6) werden bevorzugt Oxalkylierungsprodukte von Fettaminen der Formel

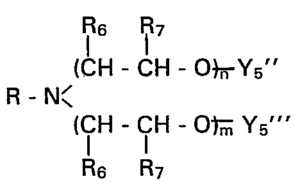

(8)

worin R, $R_6$, $R_7$, n und m wie in Formel (6) definiert sind und $Y_5''$ und $Y_5'''$ unabhängig voneinander Wasserstoff oder die Gruppe $-SO_3M$ bedeuten, worin M wie in Formel (6) definiert ist, und insbesondere solche der Formel

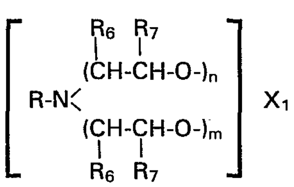

(9)

oder deren Alkalimetall-, Ammonium- oder Aminsalze eingesetzt, worin R, $R_6$, $R_7$ n und m wie in Formel (6) definiert sind und $X_1$ den Säurerest der Phosphorsäure darstellt, wobei die sauren Wasserstoffatome dieses Restes durch Alkalimetall-, Ammonium- oder Aminsalzionen ersetzt sein können.

Bevorzugt hat der Alkyl- bzw. Alkenylrest R in Formeln (8) und (9) 10-18 C-Atome und die Summe n + m beträgt 4-20, insbesondere 6-8. $R_6$ und $R_7$ stehen vorzugsweise für Wasserstoff. In Formel (8) bedeutet $Y_5''$ und/oder $Y_5'''$ insbesondere eine $-SO_3M$-Gruppe, in der M für Wasserstoff, ein Alkalimetall- oder Ammoniumion steht.

Im allgemeinen muss der Rest R nicht eine bestimmte Anzahl von Kohlenstoffatomen aufweisen, sondern er kann auch eine Mischung von verschieden langen Kohlenwasserstoffketten darstellen, wie dies etwa bei vielen Fettaminen, die sich von natürlichen Fetten ableiten, der Fall ist. Ein bevorzugter Rest dieser Art ist der Kohlenwasserstoffrest des Talgfettamins oder des Kokosfettamins. Ein weiterer bevorzugter Rest ist der Laurylrest.

Die Säurekomponente des Esters der Formel (9) ist Phosphorsäure. $X_1$ ist daher der Rest der Phosphorsäure, wobei die endständigen OH-Gruppen der Äthylenoxidketten vollständig oder nur teilweise verestert sein können. Nach dem Veresterungsgrad, der nicht ganzzahlig sein muss, richtet sich die Anzahl der sauren Wasserstoffatome im Phosphorsäurerest $X_1$. Diese sauren Wasserstoffatome können auch durch Alkalimetall- oder Ammoniumionen ersetzt sein, so dass der Rest $X_1$ in Salzform vorliegt.

Mögliche Grenzstrukturen der Verbindungen der Formel (9) wären, je nach Veresterungsgrad, beispielsweise die folgenden (für $R_6 = R_7 = H$):

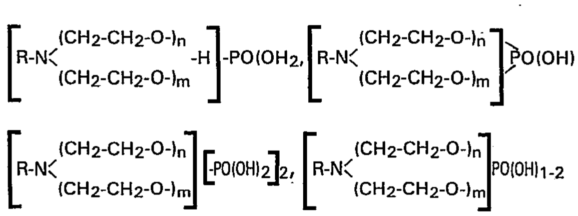

usw.

Die vorstehend beschriebenen Oxäthylierungsprodukte, z.B. solche der Formeln (6)-(9), von Fettaminen sind bekannt, z.B. aus den DE-OSen 2 412 785 und 2 928 052 und aus der EP-Anmeldung 32 483.

Als organische Lösungsmittel (Komponente D) können in den erfindungsgemässen Formulierungen polare und apolare, protische oder aprotische, mit Wasser mischbare oder nicht mischbare organische Lösungsmittel eingesetzt werden. Als Beispiele seien angeführt: aliphatische, cycloaliphatische oder aromatische Kohlenwasserstoffe, beispielsweise verschiedene Benzinfraktionen, Cyclohexan, Benzol, Toluol, Xylole, verschiedene Naphtha- und Paraffin-Fraktionen; aliphatische und alicyclische mono- oder polyfunktionelle Alkohole, wie Äthanol, Methanol, Isopropanol, Äthylenglykol, Propylenglykol, Cyclohexanol, Benzylalkohol; Ketone wie Methyläthylketon, und cyclische Ketone, wie Cyclohexanon, 3,5,5-Trimethylcyclohexen-1-on (Isophoron); chlorierte und fluorierte aliphatische oder aromatische Kohlenwasserstoffe wie Dichloräthan, Dichloräthylen, Trichloräthylen oder -äthan, Chloroform, Tetrachlorkohlenstoff, Perchloräthylen, Chlorbenzol, Dichlorbenzol, Trichlorbenzole; Äther wie Methoxyäthanol, Äthoxyäthanol, Acetoxy-2-äthoxyäthan, Dioxan; ferner Dimethylformamid, Formamid, Dimethylsulfoxid, Dimethylmethanphosphonat (DMMP), N-Methylpyrrolidon; Glykoläther wie Äthylglykol, Methylglykol, Polyäthylenglykole, Äthylenglykolalkyläther, Tri- oder Diäthylenglykolalkyläther, Äthylpolyglykol, z.B. Mischungen aus Monoäthylenglykoläthyläther, Diäthylenglykoläthyläther, Triäthylenglykoläthyläther und Polyäthylenglykolkäthyläther; Polydiole; Terpenkohlenwasserstoffe wie z.B. Pine Oil.

Bevorzugte Lösungsmittel sind: Dimethylmethanphosphonat, Acetoxy-2-äthoxy-äthan, N-Methylpyrrolidon, Äthylenglykol, Mono-, Di-, Tri- und Polyäthylenglykoläthyläther und Mischungen davon, z.B. Äthylpolyglykol, Isoparaffine, Isophoron, Benzol, Xylol, Toluol, Naphtha, Polydiole, Pine Oil u.a.

Die Tenside bzw. Emulgatoren oder Dispergatoren gemäss Komponente F in den erfindungsgemässen Formulierungen sind von der Stickstoffkomponente C verschieden und können den bekannten Klassen von Tensiden bzw. Emulgatoren oder Dispergatoren angehören. Beispiele hierfür sind u.a.: Blockpolymere aus Propylenglykol und Äthylenoxid, die der allgemeinen Formel

$$HO(C_2H_4O)_x - (C_3H_6O)_y - (C_2H_4O)_zH \qquad (10)$$

entsprechen, die ein Molekulargewicht von 2000 bis 20 000 aufweisen, worin der Äthylenoxidanteil (x+z) 10-85 Gewichtsprozent und der Propylenoxidanteil (y) 15-90 Gewichtsprozent beträgt;
äthoxylierte Fettalkohole, etwa solche der Formel $H(C_2H_4O)_{a'}$-$OR^2$, worin a' vorzugsweise eine Zahl zwischen 10 und 200, $R^2$ einen Alkyl-, Cycloalkyl- oder Alkenylrest mit 8-22 C-Atomen oder einen Phenylalkylrest bedeuten;
äthoxylierte Alkylphenole, beispielsweise solche der Formel

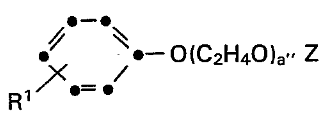

(11)

worin $R^1$ Alkyl mit 6-18 C-Atomen, Z Wasserstoff, $-SO_3M$ oder $-PO_3M$, M Wasserstoff, ein Alkalimetall- oder Ammoniumion und a'' eine Zahl zwischen 4 und 50 bedeuten;
ferner Polyvinylalkohole, Polyvinylpyrrolidone, Polyäthylenglykole, Celluloseäther, äthoxylierte Fettsäuren, N-allylierte Aminofettsäuren, Alkylphosphorsäurepartialester, Salze höherer Abkömmlinge von Schwefel-Sauerstoffsäuren (z.B. Natriumsalz der Dodecylbenzolsulfonsäure, wasserlösliche Salze von Schwefelsäuremonoestern höhermolekularer Alkohole oder ihrer Polyglykoläther, wie etwa lösliche Salze von Dodecylalkoholsulfat oder von Dodecylalkoholpolyglykoläther-sulfat), Abkömmlinge von Phosphor-Sauerstoffsäuren (z.B. Phosphate), Oniumverbindungen, Polyhydroxyverbindungen, Tenside auf Mono- oder Polysaccharidbasis, höhermolekulare Acetylenglykole, Polyglykoläther (z.B. Polyglykoläther höherer Fettalkohole, Polyglykoläther höhermolekular-alkylierter Phenole), sulfatiertes Ricinusöl, Fettalkoholsulfate, Alkylsulfonate, lösliche Salze von Sulfonsäurehalbestern höherer Fettalkohole, höher und/oder mehrfach alkylsubstituierte Arylsulfonsäuren, Sulfocarbonsäureester mittlerer bis höherer Alkohole, Fettsäureacylaminoalkyl- oder -aminoarylglycerinsulfonate, Phosphorsäureester von Fettalkoholen, Alkylbenzolsulfonate, Paraffinsulfonate, α-Olefinsulfonate, α-Sulfocarbonsäuren, deren Salze und Ester, Alkylglyceryläthersulfonate, Fettsäuremonoglyceridsulfate und -sulfonate, 2-Acyloxyalkansulfonate, β-Alkyloxyalkansulfonate, Polypropoxyglykole, Phosphinoxide, Sulfoxide und N,N-Dialkylaminocarbonsäuren.

Bevorzugte Tenside bzw. Dispergatoren und Emulgatoren sind: Blockpolymere aus Propylenglykol und Äthylenoxid (siehe auch obige Formel 10), Polyglykoläther höherer Fettalkohole, äthoxylierte Alkylphenole (Alkylphenolpolyglykoläther) und deren Ester mit Säuren, z.B. die entsprechenden Sulfate und Phosphate (siehe auch obige Formel 11), äthoxylierte Fettalkohole, äthoxylierte cyclische Alkohole, Alkylphosphorsäurepartialester, N,N-Dialkylaminocarbonsäuren und Polyäthylenglykol.

Als aliphatische Carbonsäuren, die als Komponente G gegebenenfalls in erfindungsgemässen Formulierungen vorhanden sein können, kommen vorzugsweise gesättigte oder ungesättigte Monocarbonsäuren, Dicarbonsäuren oder Hydroxymono- oder -dicarbonsäuren in Frage. Beispiele für solche Säuren sind: Ameisensäure, Essigsäure, Propionsäure, Buttersäure, Valeriansäure und längerkettige Monocarbonsäuren, Oxalsäure, Malonsäure, Maleinsäure, Fumarsäure, Glutarsäure, Adipinsäure, Weinsäure, Äpfelsäure, Citronensäure, Bernsteinsäure, Milchsäure usw. Bevorzugt sind Ameisensäure, Essigsäure, Bernsteinsäure und Milchsäure.

Die erfindungsgemässen Formulierungen können fakultativ auch noch weitere Komponenten enthalten, z.B. solche, die die Eigenschaften der Formulierung selbst weiter verbessern oder/und die die Applikation erleichtern oder/und die die Wirksamkeit der Wirkstoffkombination noch weiter erhöhen. Ein Beispiel für eine derartige Komponente ist Piperonylbutoxid, das einen noch besseren Schutz der mit den erfindungsgemässen Formulierungen behandelten Substrate bewirkt. Beispielsweise kann Piperonylbutoxid (3,4-Methylendioxy-6-propylenbenzyl)-butyl-diäthylenglykoläther) in einer Menge von 5 bis 40% in den Formulierungen enthalten sein.

Bevorzugte erfindungsgemässe Formulierungen, in denen die Komponenten gelöst sind, haben etwa folgende Zusammensetzung:

A. 1-15% einer 5-Phenylcarbamoylbarbitursäure der Formel (3), insbesondere einer solchen, worin X Sauerstoff, $R_3'$ $CF_3$, Cl oder Br, $R_4'$ Cl oder Wasserstoff und $R_5'$ Wasserstoff bedeuten und $R_1''$ und $R_2''$ gleich sind,

B. 1-15% eines synthetischen Pyrethroids der Formel

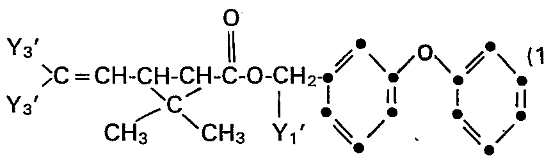

(12)

worin $X_1'$ Wasserstoff, CN, $CH_3$, $-CH=CH_2$ oder $-C\equiv CH$ und $Y_3'$ Br, Cl oder $CH_3$ bedeuten,

C. 5-60% eines primären, sekundären oder tertiären Fettamins oder Fettaminoxids, eines gegebenenfalls äthoxylierten Fettsäureamids, eines quaternären Fettamins, eines cyclischen Amins, das mit einer Alkyl- oder Alkenylgruppe mit 8-22 C-Atomen substituiert ist, eines äthoxylierten Fettsäurealkylolamids, eines Alkylpropylendiamins, eines äthoxylierten Aminoalkohols oder eines äthoxylierten primären, sekundären, tertiären oder quaternären Fettamins, insbesondere eines solchen der Formel (6), oder einer Mischung mehrerer der vorgenannten stickstoffhaltigen Verbindungen,

D. 15-75% eines oder mehrerer organischen(r) Lösungsmittel(s),

E. 0-40% Wasser, sofern Komponente D ein mit Wasser mischbares organisches Lösungsmittel ist,

F. 0-15% eines Tensids und/oder Emulgators oder Dispergators oder einer Mischung aus mehreren solchen Substanzen und

G. 0-5% einer gesättigten oder ungesättigten Mono- oder Dicarbonsäure, oder einer Hydroxymono- oder -dicarbonsäure.

Besonders vorteilhaft sind erfindungsgemässe Formulierungen, die aus

A. 1-10% einer 5-Phenylcarbamoylbarbitursäure der Formel (3), worin X Sauerstoff, $R_1''$ und $R_2''$ Methyl, $R_3'$ Chlor, $R_4'$ Wasserstoff oder Chlor $R_5'$ Wasserstoff bedeuten,

B. 1-10% eines synthetischen Pyrethroids der Formel (12), worin $Y_1'$ Wasserstoff oder Cyano und $Y_3'$ Chlor bedeuten,

C. 10-50% eines primären, sekundären oder tertiären Fettamins oder Fettaminoxids, eines quaternären Fettamins, eines 1-($C_1$-$C_4$)-Alkyl- oder Hydroxyalkyl-2-($C_8$-$C_{20}$)-alkyl- bzw. -alkenylimidazolins oder eines äthoxylierten Fettamins der Formel (8) oder (9), oder einer Mischung mehrerer der vorgenannten stickstoffhaltigen Verbindungen,

D. 15-75% eines oder mehrerer Lösungsmittel aus der Gruppe Dimethylmethanphosphonat, Acetoxy-2-äthoxy-äthan, N-Methylpyrrolidon, Äthylenglykol, Mono-, Di-, Tri- und Polyäthylenglykoläthyläther und Mischungen davon, z.B. Äthylpolyglykol, Isoparaffine, Isophoron, Benzol, Xylol, Toluol, Naphtha, Polydiole und Pine Oil,

E. 0-40% Wasser, sofern Komponente D ein mit Wasser mischbares Lösungsmittel ist,

F. 0-15% eines Tensids bzw. Dispergators oder Emulgators aus der Gruppe: Blockpolymere aus Propylenglykol und Äthylenoxid, Polyglykoläther höherer Fettalkohole, äthoxylierte Alkylphenole und deren Ester mit Säuren, z.B. die entsprechenden Sulfate und Phosphate, äthoxylierte Fettalkohole, äthoxylierte cyclische Alkohle, Alkylphosphorsäurepartialester, N,N-Dialkylaminocarbonsäuren und Polyäthylenglykol und

G. 0-5% einer Carbonsäure aus der Gruppe: Ameisensäure, Essigsäure, Propionsäure, Buttersäure, Valeriansäure und längerkettige Monocarbonsäuren, Oxalsäure, Malonsäure, Maleinsäure, Fumarsäure, Glutarsäure, Adipinsäure, Weinsäure, Äpfelsäure, Citronensäure, Bernsteinsäure und Milchsäure.

Die Herstellung der vorgenannten erfindungsgemässen Formulierungen kann prinzipiell durch Zusammengeben der Einzelkomponenten in an sich beliebiger Reihenfolge und gutes Durchmischen derselben, gegebenenfalls unter leichter Erwärmung, bis eine homogene Formulierung (in der Regel Lösung) entstanden ist, erfolgen. In einer bevorzugten Ausführungsform werden die Komponenten B bis G zuerst gemischt und anschliessend wird Komponente A unter gutem Rühren, gegebenenfalls bei erhöhter Temperatur, z.B. zwischen 40 und 70°C, zugegeben. Man erhält auf diese Weise in den meisten Fällen sofort eine klare Lösung.

Die erfindungsgemässen Mottenschutzformulierungen können zum Schützen von Keratinmaterial gegen keratinfressende Insekten eingesetzt werden, wie z.B. gegen keratinfressende Larven von Lepidoptera, z.B. Tineola spec. und Tinea spec. sowie gegen keratinfressende Larven von Coleoptera, z.B. Anthrenus spec. und Attagenus spec. Die Formulierungen eignen sich vorzüglich zum Schützen von keratinischen bzw. keratinhaltigem Material gegen Insektenfrass, insbesondere zur wasch- und lichtechten Ausrüstung gegen Insekten, insbesondere zur Motten- und Käferechtausrüstung von derartigen Materialien. Es kann keratinisches bzw. keratinhaltiges Material sowohl in rohem als auch in verarbeitetem Zustand ausgerüstet werden, zum Beispiel rohe oder verarbeitete Schafwolle, Produkte aus anderen Tierhaaren, Felle, Pelze und Federn.

Praktisch besonders wichtig ist die Wirksamkeit der erfindungsgemässen Mittel gegen die Larven der Kleidermotte (Tineola bisselliella), der Pelzmotte (Tinea pellionella) und der Samenmotte (Hofmannophila pseudopretella) sowie gegen die Larven der Pelz- und Teppichkäfer (Attagenus spec. bzw. Anthrenus spec.), z.B. des Wollkraut-Blütenkäfers (Anthrenus verbasci), des Bibernell-Blütenkäfers (Anthrenus pimpinellae), des Gemeinen Teppichkäfers (Anthrenus scrophilariae), des Bebänderten Teppichkäfers (Anthrenus fasciatus), des Gefleckten Pelzkäfers (Attagenus Pellio) und vor allem des Dunklen Pelzkäfers (Attagenus piceus) und des Teppichkäfers Anthrenus vorax.

Bevorzugt wird das erfindungsgemässe Verfahren einerseits zum Schützen von Textilien aus Wolle, z.B. von Wolldecken, Wollteppichen, Wollwäsche, Wollkleidern und Wirkwaren bzw. wollhaltigen Textilien, wie Mischgeweben, deren eine Komponente Wolle ist, z.B. Mischgeweben aus Wolle und anderen Naturfasern, vorzugsweise Baumwolle oder aus Wolle und Kunstfasern, andererseits auch zum Schützen von Pelzen und Fellen vor dem Befall durch die erwähnten Schädlinge eingesetzt.

Das erfindungsgemässe Verfahren zum Schützen

von Keratinmaterial, insbesondere von Wolltextilien, gegen die obengenannten Schädlinge, ist dadurch gekennzeichnet, dass man aus einem Teil einer erfindungsgemässen Formulierung durch Verdünnung eine Applikationsflotte bereitet, der gegebenenfalls noch übliche Textilhilfsmittel oder/und Farbstoffe zugefügt werden können und mit dieser Flotte das zu schützende Material imprägniert.

Die Textilmaterialien können z.B. durch heisse oder kalte wässrige Färbe-, Bleich-, Chromierungs- oder Nachbehandlungsbäder, die einen bestimmten Teil einer erfindungsgemässen Formulierung enthalten, imprägniert werden, wobei verschiedene Textilausrüstungsverfahren, wie z.B. das Foulard- oder Ausziehverfahren, in Frage kommen.

Die Behandlung erfolgt zweckmässig bei Temperaturen von 10 bis 100°C, im Färbebad vorzugsweise bei etwa 60 - 100°C, im Nachbehandlungs- oder Waschbad bei vorzugsweise 10 bis 70, insbesondere 20 bis 60°C.

Als zusätzliche Hilfsmittel können den Applikationsflotten z.B. Dispergatoren, Emulgatoren oder Tenside zugegeben werden, sofern nicht schon genügend davon durch die Formulierung eingebracht wird. Daneben kann die Flotte auch noch übliche Hilfsstoffe, wie wasserlösliche Perborate, Polyphosphate, Carbonate, Silikate, optische Aufheller, Weichmacher, sauer reagierende Salze, wie Ammonium- oder Zinksilikonfluorid, oder gewisse organische Säuren, wie Oxalsäure, Essigsäure oder besonders Ameisensäure, ferner Antimikrobika und Appreturmittel, z.B. solche auf Kunstharzbasis oder Stärke, enthalten. Falls die Motten- und Käferechtausrüstung gemeinsam mit dem Färben des Materials (z.B. Wolle) durchgeführt wird, enthalten die Flotten auch noch die entsprechenden Farbstoffe und gegebenenfalls die dazu erforderlichen Hilfsmittel, z.B. Egalisiermittel.

Im Falle von nicht-wässriger Applikation (Lösungsmittelapplikation) kann ein entsprechender Teil einer erfindungsgemässen Formulierung auch einem geeigneten Lösungsmittel zugegeben werden und mit der so erhaltenen Lösung kann das zu schützende Material imprägniert werden. Als Lösungsmittel kommen hierfür unter anderen Trichloräthylen, Methylenchlorid, Kohlenwasserstoffe, Propylenglykol, Methoxyäthanol, Äthoxyäthanol, Dimethylformamid in Frage, denen noch Verteilungsmittel (z.B. Emulgatoren, wie sulfiertes Ricinusöl, Fettalkoholsulfate usw.) und/oder andere Hilfsstoffe zugesetzt werden können. Die zu schützenden Materialien werden üblicherweise mit diesen Lösungen einfach imprägniert.

Die Ausrüstung der zu schützenden Materialien kann aber auch mit einem Trockenreinigungsprozess kombiniert werden. Ein entsprechender Teil einer erfindungsgemässen Formulierung wird zu diesem Zweck im Reinigungsmittel (etwa niedere halogenierte Alkane, z.B. Trichloräthylen usw.) gelöst und der Reinigungsprozess wird wie üblich durchgeführt.

Ein Anteil einer erfindungsgemässen Formulierung kann aber auch in leicht flüchtigen organischen Lösungsmitteln gelöst werden und diese Lösung kann dann auf das zu schützende Substrat aufgesprüht werden (Sprühapplikation). Für diese Appliaktionsart eignen sich vor allem wollhaltige Textilien, Pelze und Federn. Der Vorteil der Sprühapplikation besteht darin, dass wegen der Rückgewinnung der Lösungsmittel eine Belastung der Abwässer vermieden wird.

Im erfindungsgemässen Verfahren können die erfindungsgemässen Mittel auch in Kombination mit anderen gegen keratinfressende Insekten wirksamen Schutzmitteln angewendet werden, z.B. in Kombination mit Harnstoffderivaten, Benzimidazolen, aromatischen Sulfonamiden und Phosphor- und Phosphonsäureestern.

Die jeweils eingesetzte Menge an erfindungsgemässer Formulierung, die in das jeweilige Applikationsbad bzw. das nichtwässrige Lösungsmittel eingebracht wird, hängt vom jeweiligen Substrat und der Applikationsmethode ab. Diese Menge wird üblicherweise jedoch so bemessen, dass nach dem Aufziehen auf das jeweils zu schützende Material letzteres etwa 10 bis 2000 ppm, vorzugsweise 100 bis 1000 ppm an Wirksubstanz, also an Barbiturat + Pyrethroid (an Komponente A + B) enthält, wobei die obere Grenze weitgehend durch Überlegungen ökonomischer Natur gegeben ist, während die untere Grenze von Kriterien wie angestrebte Breite und Dauerhaftigkeit der Schutzwirkung abhängt. Dies ergibt z.B. für das Ausziehverfahren bei einem Flottenverhältnis von 1 : 20 Konzentrationen von 0,001 bis 1 g Wirksubstanz/l Behandlungsbad, d.h. etwa 0,005 bis 200 g der jeweiligen Formulierung pro Liter Behandlungsbad, je nach erreichbarem Ausziehgrad. Beim Foulardverfahren sind Konzentrationen bis 400 g Formulierung pro Liter möglich.

In den nachfolgenden Beispielen sind, sofern nichts anderes angegeben ist, Teile Gewichtsteile und Prozente Gewichtsprozente. Unter den Bezeichnungen «Permethrin» und «Cypermethrin» sind die vorstehend definierten Verbindungen der Formeln (4) und (5) zu verstehen.

*Beispiel 1*

| | | |
|---|---|---|
| 5,5 | Teile | Cypermethrin (cis : trans = 35±5% : 65±5%), |
| 5,0 | » | mit 6-7 Mol Äthylenoxid äthoxyliertes Talgfettamin, |
| 25,0 | » | Dimethyllaurylaminoxid, |
| 14,5 | » | eines Blockpolymeren aus Propylenglykol und Äthylenoxid (mittleres Molekulargewicht: 4900; 80% hydrophobe Gruppen, 20% hydrophile Gruppen; HLB = 4), |
| 7,5 | » | Rizinuspolyglykoläther, |
| 3,0 | » | Alkylphenolpolyglykolätherphosphat und |
| 34,5 | » | Dimethylmethanphosphonat (DMMP) |

werden gemischt. Zu dieser Mischung werden unter ständigem Rühren bei 45 - 55°C 5,0 Teile 5-(3,4-Dichlorphenyl)carbamoyl-1,3-dimethylbarbitursäure (Fp. 180-182°C) gegeben, bis eine homogene Formulierung entsteht. Diese so erhaltene Mottenschutzformulierung ist lagerstabil, mit Wasser mischbar und sie führt bei der Applikation auf Keratinmaterial zu ausgezeichneten Motten- und Käferechtausrüstungen.

In der oben beschriebenen Formulierung kann Cypermethrin durch Permethrin, DMMP durch N-Methyl-2-pyrrolidon, Diäthylenglykoläthyläther, Äthylpolyglykol oder Polydiole und/oder Alkylphenolpolyglykolätherphosphat durch Bernsteinsäure, Milchsäure, Ameisensäure oder Essigsäure ersetzt werden. Man kommt dann zu Formulierungen mit ähnlich guten Eigenschaften.

Die in den folgenden Beispielen angeführten Formulierungen werden analog Beispiel 1 erhalten, d.h. die Bestandteile mit Ausnahme des Barbitursäurederivates werden gemischt und letzteres wird anschliessend in der beschriebenen Weise eingearbeitet. Alle diese so erhaltenen Formulierungen weisen die geforderten Eigenschaften auf, nämlich gute Lagerstabilität, Mischbarkeit mit Wasser und problemlose Applikation auf Keratinmaterialien.

*Beispiel 2*

Die Formulierung folgender Zusammensetzung wird analog Beispiel 1 erhalten:

| | | |
|---|---|---|
| 5,5 | Teile | Cypermethrin (cis : trans = 35±5% : 65±5%), |
| 5,0 | » | 5-(3,4-Dichlorphenyl)carbamoyl-1,3-dimethylbarbitursäure, |
| 20,0 | » | mit 6-7 Mol Äthylenoxid äthoxyliertes Talgfettamin, |
| 10,0 | » | eines Blockpolymeren aus Propylenglykol und Äthylenoxid (mittleres Molekulargewicht: 4900; 80% hydrophobe Gruppen, 20% hydrophile Gruppen; HLB = 4), |
| 5,0 | » | mit 8-9 Mol Äthylenoxid äthoxylierter Stearylalkohl |
| 1,5 | » | eines Alkylphosphorsäurepartialesters, |
| 53,0 | » | Dimethylmethanphosphonat (DMMP). |

In dieser Formulierung kann Cypermethrin durch Permethrin, DMMP durch 1-Acetoxy-2-äthoxyäthan, N-Methyl-2-pyrrolidon, Diäthylenglykoläthyläther, Äthylpolyglykol oder Polydiole und/oder der Alkylphosphorsäurepartialester durch Bernsteinsäure, Milchsäure, Ameisensäure oder Essigsäure ersetzt werden.

*Beispiel 3*

Die Formulierung folgender Zusammensetzung wird analog Beispiel 1 erhalten:

| | | |
|---|---|---|
| 5,5 | Teile | Permethrin, |
| 5,0 | » | 5-(3,4-Dichlorphenyl)carbamoyl-1,3-dimethylbarbitursäure, |
| 20,0 | » | mit 6-7 Mol Äthylenoxid äthoxyliertes Talgfettamin, |
| 5,0 | » | eines Blockpolymeren aus Propylenglykol und Äthylenoxid (mittleres Molekulargewicht: 4900; 80% hydrophobe Gruppen, 20% hydrophile Gruppen; HLB = 4), |
| 7,0 | » | Rizinuspolyglykoläther, |
| 3,0 | » | Alkylphosphorsäurepartialester, |
| 54,5 | » | Isophoron (= 3,5,5-Trimethyl-2-cyclohexen-1-on). |

In dieser Formulierung kann Cypermethrin durch Permethrin und/oder der Alkylphosphorsäurepartialester durch Bernsteinsäure, Milchsäure, Ameisensäure oder Essigsäure ersetzt werden.

*Beispiel 4*

Die Formulierung folgender Zusammensetzung wird analog Beispiel 1 erhalten:

| | | |
|---|---|---|
| 5,3 | Teile | Permethirn, |
| 5,0 | » | 5-(3,4-Dichlorphenyl)carbamoyl-1,3-dimethylbarbitursäure, |
| 8,0 | » | 1-Hydroxyäthyl-2-oleyl-imidazolin, |
| 7,0 | » | mit 6-7 Mol Äthylenoxid äthoxyliertes Talgfettamin, |
| 73,7 | » | Diäthylenglykoläther, |
| 1,0 | » | Milchsäure, racemisch. |

In dieser Formulierung kann Permethrin durch Cypermethrin, Milchsäure durch einen Alkylphosphorsäurepartialester, Ameisensäure, Essigsäure, Propionsäure oder andere Carbonsäuren und/oder Diäthylenglykoläthyläther durch DMMP, N-Methyl-2--pyrrolidon, Äthylpolyglykol oder Polydiole ersetzt werden.

*Beispiel 5*

Die Formulierung folgender Zusammensetzung wird analog Beispiel 1 erhalten:

| | | |
|---|---|---|
| 5,5 | Teile | Cypermethrin, |
| 5,0 | » | 5-(3,4-Dichlorphenyl)carbamoyl-1,3-dimethylbarbitursäure, |
| 10,0 | » | Dimethyllaurylamin, |
| 15,0 | » | eines Blockpolymeren aus Propylenglykol und Äthylenoxid (mittleres Molekulargewicht: 4900; 80% hydrophobe Gruppen, 20% hydrophile Gruppen; HLB = 4), |
| 10,0 | » | N-Lauryl-N-myristyl-β-aminopropionsäure, |
| 51,5 | » | Diäthylenglykoläthyläther, |
| 3,0 | » | Bernsteinsäure. |

In dieser Formulierung kann Cypermethrin durch Permethrin und/oder Bernsteinsäure durch Essigsäure, Ameisensäure, Milchsäure oder einen Alkylphosphorsäurepartialester ersetzt werden.

*Beispiel 6*

Die Formulierung folgender Zusammensetzung wird analog Beispiel 1 erhalten:

| | | |
|---|---|---|
| 5,5 | Teile | Permethrin, |
| 5,0 | » | 5-(3,4-Dichlorphenyl)carbamoyl-1,3-dimethylbarbitursäure, |
| 12,0 | » | Dimethyllaurylamin, |
| 12,0 | » | Laurylpolyglykoläther, |
| 5,0 | » | Difettsäureisopropylester-dimethylammonium-methosulfat, |
| 10,0 | » | Benzylalkohol, |
| 46,0 | » | Isoparaffin, |
| 4,5 | » | Milchsäure, racemisch. |

In dieser Formulierung kann Cypermethrin durch Permethrin und/oder Milchsäure durch Bernsteinsäure, Ameisensäure, Essigsäure oder einen Alkylphosphorsäurepartialester ersetzt werden.

*Beispiel 7*

Die Formulierung folgender Zusammensetzung wird analog Beispiel 1 erhalten:

5,5 Teile Cypermethrin,
5,0 » 5-(3,4-Dichlorphenyl)carbamoyl-1,3-dimethylbarbitursäure,
5,0 » Dimethyllaurylamin,
5,0 » 1-Hydroxyäthyl-2-oleyl-imidazolin,
9,0 » Nonylphenolpolyglykoläther,
6,0 » Distearyldimethylammoniumchlorid,
10,0 » Isophoron,
51,5 » Isoparaffin,
3,0 » Milchsäure, racemisch.

In dieser Formulierung kann Cypermethrin durch Permethrin und/oder Milchsäure durch Bensteinsäure, Ameisensäure, Essigsäure oder einen Alkylphosphorsäurepartialester ersetzt werden.

*Beispiel 8*

Die Formulierung folgender Zusammensetzung wird analog Beispiel 1 erhalten:

5,5 Teile Cypermethrin,
5,0 » 5-(3,4-Dichlorphenyl)carbamoyl-1,3-dimethylbarbitursäure,
12,0 » Dimethylcocoylamin,
12,0 » Laurylpolyglykoläther,
5,0 » Difettsäureisopropylester-dimethylammonium-methosulfat,
10,0 » Isophoron,
46,0 » Isoparaffin,
4,5 » Milchsäure, racemisch.

In dieser Formulierung kann Cypermethrin durch Permethrin und/oder Milchsäure durch Bernsteinsäure, Ameisensäure, Essigsäure oder einen Alkylphosphorsäurepartialester ersetzt werden.

*Beispiel 9*

Die Formulierung folgender Zusammensetzung wird analog Beispiel 1 erhalten:

5,5 Teile Permethrin,
5,0 » 5-(3,4-Dichlorphenyl)carbamoyl-1,3-dimethylbarbitursäure,
10,0 » Dimethylcocoylamin,
4,0 » Rizinuspolyglykoläther,
3,0 » mit 5 Mol Äthylenoxid äthoxyliertes 2-Äthyl-1-hexanol,
7,5 » mit 8-9 Mol Äthylenoxid äthoxylierter Stearylalkohol,
62,7 » Xylol (Isomerengemisch),
2,3 » Ameisensäure.

In dieser Formulierung kann Permethrin durch Cypermethrin und/oder Ameisensäure durch Essigsäure, Milchsäure, Bernsteinsäure oder einen Alkylphosphorsäurepartialester ersetzt werden.

*Beispiel 10*

Die Formulierung folgender Zusammensetzung wird analog Beispiel 1 erhalten:

5,5 Teile Permethrin,
5,0 » 5-(3,4-Dichlorphenyl)carbamoyl-1,3-dimethylbarbitursäure,
5,0 » Dimethylcocoylamin,
10,0 » mit 6-7 Mol Äthylenoxid äthoxyliertes Talgfettamin,
73,0 » Dimethylmethanphosphonat (DMMP),
1,5 » Ameisensäure.

In dieser Formulierung kann Permethrin durch Cypermethrin und/oder Ameisensäure durch Essigsäure, Milchsäure, Bernsteinsäure oder einen Alkylphosphorsäurepartialester ersetzt werden.

*Beispiel 11*

Die Formulierung folgender Zusammensetzung wird analog Beispiel 1 erhalten:

5,5 Teile Cypermethrin,
5,0 » 5-(3,4-Dichlorphenyl)carbamoyl-1,3-dimethylbarbitursäure,
10,0 » Dimethylcocoylamin,
9,5 » Octylphenolpolyglykoläther,
67,0 » Pine Oil,
3,0 » Alkylphosphorsäurepartialester.

In dieser Formulierung kann Cypermethrin durch Permethrin und/oder der Alkylphosphorsäurepartialester durch Bernsteinsäure, Milchsäure, Ameisensäure oder Essigsäure ersetzt werden.

*Beispiel 12*

Die Formulierung folgender Zusammensetzung wird analog Beispiel 1 erhalten:

5,5 Teile Permethrin oder Cypemethrin,
5,0 » 5-(3,4-Dichlorphenyl)carbamoyl-1,3-dimethylbarbitursäure,
30,0 » mit 5 Mol Äthylenoxid äthoxyliertes Cocoylamin,
10,0 » eines Blockpolymeren aus Propylenglykol und Äthylenoxid (mittleres Molekulargewicht: 6350; 50% hydrophobe Gruppen und 50% hydrophile Gruppen; HLB = 15),
10,0 » Nonylphenoläthersulfat, Na-Salz, mit 40 Mol Äthylenoxid äthoxyliert,
15,0 » Äthylpolyglykol,
24,5 » Wasser

oder:

5,5 Teile Permethrin oder Cypermethrin,
5,0 » 5-(3,4-Dichlorphenyl)carbamoyl-1,3-dimethylbarbitursäure,
30,0 » mit 8 Mol Äthylenoxoid äthoxyliertes Cocoylamin,
10,0 » Nonylphenoläthersulfat, Na-Salz, mit 40 Mol Äthylenoxid äthoxyliert,
15,0 » Äthylpolyglykol,
34,5 » Wasser.

*Beispiel 13*

Die Formulierung folgender Zusammensetzung wird analog Beispiel 1 erhalten:

5,5 Teile Permethrin oder Cypermethrin,
5,0 » 5-(3,4-Dichlorphenyl)carbamoyl-1,3-dimethylbarbitursäure,
20,0 » mit 6-7 Mol Äthylenoxid äthoxyliertes Talgfettamin,
29,5 » Äthylpolyglykol,
20,0 » Nonylphenoläthersulfat, Na-Salz, mit 40 Mol Äthylenoxid äthoxyliert,
20,0 » eines Blockpolymeren aus Propylenglykol und Äthylenoxid (mittleres Molekulargewicht: 6350; 50% hydrophobe und 50% hydrophile Gruppen; HLB = 15),

oder

5,5 Teile Permethrin oder Cypermethrin,
5,0 » 5-(3,4-Dichlorphenyl)carbamoyl-1,3-dimethylbarbitursäure,
20,0 » mit 6-7 Mol Äthylenoxid äthyliertes Talgfettamin,
29,5 » Äthylpolyglykol,
20,0 » eines Blockpolymeren aus Propylenglykol und Äthylenoxid (mittleres Molekulargewicht: 4900; 80% hydrophobe und 20% hydrophile Gruppen; HLB = 4),
20,0 » Wasser.

*Beispiel 14*

Die Formulierung folgender Zusammensetzung wird analog Beispiel 1 erhalten:

5,5 Teile Permethrin oder Cypermethrin,
5,0 » 5-(3,4-Dichlorphenyl)carbamoyl-1,3-dimethylbarbitursäure,
45,0 » der Verbindung der Formel

$$\left[ C_{12}H_{25}N{<}\begin{matrix}(CH_2\text{-}CH_2\text{-}O)_{\overline{p_1}}\\(CH_2\text{-}CH_2\text{-}O)_{\overline{q_1}}\end{matrix} \right] X$$

worin $p_1 + q_1 = 8$ und X einen sauren Phosphorsäurerest bedeutet,
20,0 » eines Blockpolymeren aus Propylenglykol und Äthylenoxid (mittleres Molekulargewicht: 6350; 50% hydrophobe und 50% hydrophile Gruppen; HLB = 15),
12,5 » Nonylphenoläthersulfat, Na-Salz, mit 40 Mol Äthylenoxid äthoxyliert,
7,0 » Äthylpolyglykol,
5,0 » Polyäthylenglykol 300.

*Beispiel 15*

Die Formulierung folgender Zusammensetzung wird analog Beispiel 1 erhalten:

5,5 Teile Permethrin oder Cypermethrin,
5,0 » 5-(3,4-Dichlorphenyl)carbamoyl-1,3-dimethylbarbitursäure,
30,0 » der Verbindung der Formel

$$\left[ R'\text{-}N{<}\begin{matrix}(CH_2\text{-}CH_2\text{-}O)_{\overline{p_1}}\\(CH_2\text{-}CH_2\text{-}O)_{\overline{q_1}}\end{matrix} \right] X$$

worin $p_1 + q_1 = 8$; X einen sauren Phosphorsäurerest und R' den Kohlenwasserstoffrest des Talgfettamins bedeuten,
10,0 » eines Blockpolymeren aus Propylenglykol und Äthylenoxid (mittleres Molekulargewicht: 4900; 80% hydrophobe und 20% hydrophile Gruppen; HLB = 4),
15,0 » Äthylpolyglykol,
34,5 » Wasser.

*Beispiel 16*

Die Formulierung folgender Zusammensetzung wird analog Beispiel 1 erhalten:

5,5 Teile Permethrin oder Cypermethrin,
5,0 » 5-(3,4-Dichlorphenyl)carbamoyl-1,3-dimethylbarbitursäure,
40,0 » der Verbindung der Formel

$$\left[ R''\text{-}N{<}\begin{matrix}(CH_2\text{-}CH_2\text{-}O)_aH\\(CH_2\text{-}CH_2\text{-}O)_bH\\(CH_2CH_2O)_cH\end{matrix} \right]^{\oplus} OH^{\ominus}$$

worin R'' der Kohlenwasserstoffrest eines Fettamins ist und die Summe a + b + + c 10 beträgt,
10,0 » eines Blockpolymeren aus Propylenglykol und Äthylenoxid (mittleres Molekulargewicht: 6350; 50% hydrophobe und 50% hydrophile Gruppen; HLB = 15),
15,0 » Äthylpolyglykol,
24,5 » Wasser.

Die fünf Formulierungen der nachfolgend beschriebenen Zusammensetzungen (Beispiele 17-21) werden analog Beispiel 1 erhalten:

*Beispiel 17*

5,3 Teile Permethrin,
5,0 » 5-(3,4-Dichlorphenyl)carbamoyl-1,3-dimethylbarbitursäure,
1,1 » Isopropanolamin (1-Amino-2-propanol),
5,0 » eines Gemisches der Formel

$$R^1N{<}\begin{matrix}(CH_2\text{-}CH_2O)_xH\\(CH_2\text{-}CH_2O)_yH\end{matrix}$$

worin x + y etwa 7 und $R^1$ eine Mischung aus ca. 30% $CH_3(CH_2)_{15}$-, ca. 30% $CH_3(CH_2)_{17}$- und ca. 40% $CH_3$-$(CH_2)_7$-$CH{=}CH$-$(CH_2)_8$- bedeuten,
5,0 » eines Kondensationsproduktes von Äthylendiamin mit Propylenoxid und Äthylenoxid. (Verhältnis Propoxygruppen : Äthoxygruppen = 90 : 10; mittleres Molgewicht: 6000 - 6500),
1,0 » eines Kondensationsproduktes aus 2 Mol Nonylphenol mit je 10 Mol Äthylenoxid, mit Phosphorsäure verestert [di-(Nonylphenol-dekaglykoläther)-phosphat],
73,6 » Diäthylenglykolmonomethyläther,
4,0 » Wasser.

*Beispiel 18*

5,3 Teile Permethrin,
5,0 » 5-(3,4-Dichlorphenyl)carbamoyl-1,3-dimethylbarbitursäure,
1,1 » Isopropanolamin (1-Amino-2-propanol),
5,0 » eines Gemisches der Formel

$$R^1N{<}\begin{matrix}(CH_2\text{-}CH_2O)_xH\\(CH_2\text{-}CH_2O)_yH\end{matrix}$$

worin x + y etwa 7 und $R^1$ eine Mischung aus ca. 30% $CH_3(CH_2)_{15}$-, ca. 30% $CH_3(CH_2)_{17}$- und ca. 40% $CH_3$-$(CH_2)_7$-$CH{=}CH$-$(CH_2)_8$- bedeuten,

5,0 » eines Blockpolymeren aus Propylenglykol und Äthylenoxid (mittleres Molekulargewicht: ca. 3500; 90% hydrophobe Gruppen, 10% hydrophile Gruppen),
73,6 » Diäthylenglykolmonomethyläther,
5,0 » Wasser.

*Beispiel 19*

5,3 Teile Permethrin,
5,0 » 5-(3,4-Dichlorphenyl)carbamoyl-1,3-dimethylbarbitursäure,
2,0 » Diisopropanolamin [Bis-(2-hydroxy-propyl)amin],
3,0 » eines Gemisches der Formel

$$R^1N<\begin{matrix}(CH_2\text{-}CH_2O)_xH\\(CH_2\text{-}CH_2O)_yH\end{matrix}$$

worin x + y etwa 7 und $R^1$ eine Mischung aus ca. 30% $CH_3(CH_2)_{15}$-, ca. 30% $CH_3(CH_2)_{17}$- und ca. 40% $CH_3$-$(CH_2)_7$-$CH=CH$-$(CH_2)_8$- bedeuten,
3,0 » eines Blockpolymeren aus Propylenglykol und Äthylenoxid (mittleres Molekulargewicht: 4900; 80% hydrophobe Gruppen, 20% hydrophile Gruppen),
76,7 » Diäthylenglykolmonomethyläther,
5,0 » Wasser.

*Beispiel 20*

5,3 Teile Permethrin,
5,0 » 5-(3,4-Dichlorphenyl)carbamoyl-1,3-dimethylbarbitursäure,
1,3 » 2-Dimethylaminoäthanol,
4,0 » eines Gemisches der Formel

$$R^1N<\begin{matrix}(CH_2\text{-}CH_2O)_xH\\(CH_2\text{-}CH_2O)_yH\end{matrix}$$

worin x + y etwa 7 und $R^1$ eine Mischung aus ca. 30% $CH_3(CH_2)_{15}$-, ca. 30% $CH_3(CH_2)_{17}$- und ca. 40% $CH_3$-$(CH_2)_7$-$CH=CH$-$(CH_2)_8$- bedeuten,
4,0 » eines Blockpolymeren aus Propylenglykol und Äthylenoxid (mittleres Molekulargewicht: 4900; 80% hydrophobe Gruppen, 20% hydrophile Gruppen),
45,4 » Diäthylenglykolmonomethyläther,
5,0 » Wasser.

*Beispiel 21*

5,3 Teile Permethrin,
5,0 » 5-(3,4-Dichlorphenyl)carbamoyl-1,3-dimethylbarbitursäure,
4,0 » Rizinuspolyglykoläther,
6,0 » äthoxyliertes 2-Äthylhexanol,
8,0 » Dimethylcocoylamin,
25,0 » Piperonylbutoxid,
44,7 » Xylol (Isomerengemisch),
2,0 » Ameisensäure.

*Beispiel 22*

5 Teile Permethrin und 90 Teile eines propoxylierten Äthylendiamins mit einem Molekulargewicht von etwa 500 werden gemischt; dieser Mischung werden unter ständigem Rühren bei etwa 50°C 5 Teile 5-(3,4-Dichlorphenyl)carbamoyl-1,3-dimethylbarbitursäure zugegeben, bis eine homogene Formulierung entsteht. Diese Formulierung ist lagerstabil und mit Wasser mischbar.

*Beispiel 23*

Beispiel 22 wird wiederholt, statt 90 Teilen des propoxylierten Äthylendiamins mit einem Molekulargewicht von etwa 500 wird jedoch eine Mischung von 45 Teilen des letzteren und 45 Teilen eines propoxylierten Äthylendiamins mit einem Molekulargewicht von etwa 4000 eingesetzt.

*Beispiele 24 und 25*

Die beiden Formulierungen der nachfolgend beschriebenen Zusammensetzung werden analog Beispiel 22 erhalten, wobei die 5-(3,4-Dichlorphenyl)-carbamoyl-1,3-dimethylbarbitursäure jeweils der Mischung der übrigen Komponenten zugegeben wird:

5 Teile Permethrin,
5 » 5-(3,4-Dichlorphenyl)carbamoyl-1,3-dimethylbarbitursäure,
86 » eines propoxylierten Äthylendiamins mit einem Molekulargewicht von etwa 500
4 » Coprasäurediäthanolamid

5 Teile Permethrin,
5 » 5-(3,4-Dichlorphenyl)carbamoyl-1,3-dimethylbarbitursäure,
43 » eines propoxylierten Äthylendiamins mit einem Molekulargewicht von etwa 500,
43 » eines propoxylierten Äthylendiamins mit einem Molekulargewicht von etwa 4000
4 » Coprasäurediäthanolamid

*Beispiel 26*

In den gemäss Beispielen 1 - 25 erhaltenen Formulierungen kann die eingesetzte 5-(3,4-Dichlorphenyl)carbamoyl-1,3-dimethylbarbitursäure durch eines der in den nachfolgenden Tabelle 1 und 2 angeführten Barbiturate der allgemeinen Formel (A') bzw. Thiobarbiturate der allgemeinen Formel (B') ersetzt werden.

(A')

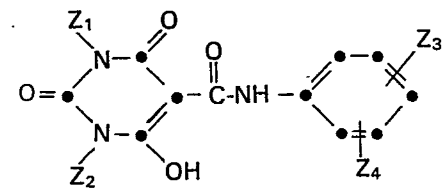

Tabelle 1

| Verbindung Nr. | $Z_1$ | $Z_2$ | $Z_3$ | $Z_4$ | Schmelzpunkt (°C) |
|---|---|---|---|---|---|
| 102 | $CH_3$ | $CH_3$ | 2-Cl | 4-Cl | 208-210 |
| 103 | $CH_3$ | $CH_3$ | 4-$CF_3$ | H | 225-227 |
| 104 | $CH_3$ | $CH_3$ | 4-$CF_3$ | H | 188-190 |
| 105 | $CH_3$ | $CH_3$ | 3-$CF_3$ | H | 139-141 |
| 106 | $CH_3$ | $CH_3$ | 3-$CF_3$ | 5-$CF_3$ | 184-185 |
| 107 | $CH_3$ | $CH_3$ | 4-Br | H | 243-245 |
| 108 | $CH_3$ | $CH_3$ | 4-J | H | 254-255 |
| 109 | $CH_3$ | $CH_3$ | 4-F | H | 188-190 |
| 110 | $CH_3$ | $CH_3$ | 3-Cl | 4-Cl | 205-206 |
| 111 | $CH_3$ | $CH_3$ | 4-Cl | 2-$CH_3$ | 179-180 |
| 112 | $CH_3$ | $CH_3$ | 2-Cl | 5-$CF_3$ | 212-213 |
| 113 | $CH_3$ | $CH_3$ | 3-Cl | 4-$CF_3$ | 160-161 |
| 114 | $CH_3$ | $C_2H_5$ | 3-$CF_3$ | 4-Cl | 124-126 |
| 115 | $CH_3$ | $C_2H_5$ | 4-Br | H | 193-195 |
| 116 | $CH_3$ | $C_2H_5$ | 2-Cl | 4-Cl | 133-135 |
| 117 | $CH_3$ | $C_2H_5$ | 3-$CF_3$ | H | 116-118 |
| 118 | $CH_3$ | (i)-$C_3H_7$ | 4-Cl | H | 183-185 |
| 119 | $CH_3$ | (i)-$C_3H_7$ | 2-Cl | 4-Cl | 163-166 |
| 120 | $CH_3$ | (i)-$C_3H_7$ | 4-Br | H | 183-185 |
| 121 | $CH_3$ | (i)-$C_4H_9$ | 4-Br | H | 156-157 |
| 122 | $CH_3$ | (i)-$C_4H_9$ | 2-Cl | 4-Cl | 157-158 |
| 123 | $CH_3$ | (i)-$C_4H_9$ | 3-$CF_3$ | H | 100-102 |
| 124 | $CH_3$ | (i)-$C_4H_9$ | 4-$CF_3$ | H | 115-117 |
| 125 | $CH_3$ | $CH_2$=CH-$CH_2$- | 4-Br | H | 124-125 |
| 126 | $CH_3$ | $CH_2$=CH-$CH_2$- | 2-Cl | 4-Cl | 143-145 |
| 127 | $CH_3$ | $CH_2$=CH-$CH_2$- | 3-$CF_3$ | H | 106-108 |
| 128 | $CH_3$ | $CH_2$=CH-$CH_2$- | 4-$CF_3$ | H | 109-111 |
| 129 | $CH_3$ | $CH_3$ | 3-Cl | 5-Cl | |
| 130 | $CH_3$ | $C_2H_5$ | 4-Cl | H | |
| 131 | $C_2H_5$ | (i)-$C_3H_7$ | 4-Cl | H | |
| 132 | $CH_3$ | $CH_2$=CH-$CH_2$- | 4-Cl | H | |
| 133 | $C_2H_5$ | $C_2H_5$ | 3-Cl | 4-Cl | |
| 134 | $C_2H_5$ | $C_2H_5$ | 3-$CF_3$ | 4-Cl | |
| 135 | $C_2H_5$ | $C_2H_5$ | 4-Cl | H | 164-166 |
| 136 | $C_2H_5$ | $C_2H_5$ | 2-Cl | 4-Cl | 143-144 |
| 137 | $C_2H_5$ | $C_2H_5$ | 4-Br | H | 170-172 |
| 138 | $C_2H_5$ | $C_2H_5$ | 4-$CF_3$ | H | |
| 139 | $C_2H_5$ | $C_2H_5$ | 3-$CF_3$ | 5-$CF_3$ | |
| 140 | $C_2H_5$ | $C_2H_5$ | 3-Cl | 4-$CF_3$ | |
| 141 | $C_2H_5$ | $C_2H_5$ | 3-$CF_3$ | H | |
| 142 | $C_2H_5$ | $C_2H_5$ | 3-Cl | 5-Cl | |
| 143 | 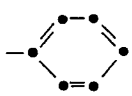 | 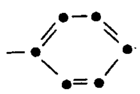 | 3-$CF_3$ | H | 174-175 |
| 144 | 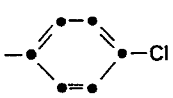 | 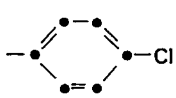 | H | 4-Cl | 229-230 |
| 145 | 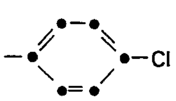 | 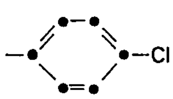 | 3-Cl | 4-Cl | 250-252 |
| 146 | 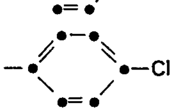 | 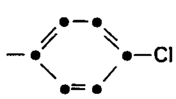 | 3-$CF_3$ | H | 178-179 |
| 147 | 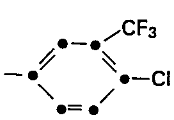 | 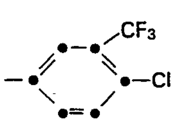 | 3-Cl | 4-Cl | 238-239 |

Tabelle 1 (Fortsetzung)

| Verbindung Nr. | $Z_1$ | $Z_2$ | $Z_3$ | $Z_4$ | Schmelzpunkt (°C) |
|---|---|---|---|---|---|
| 148 | 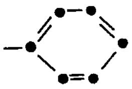 | 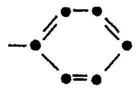 | 4-Cl | H | 218-219 |
| 149 | 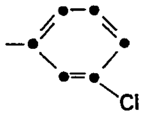 | $CH_3$ | 4-Cl | H | 193-194 |
| 150 | 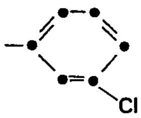 | $CH_3$ | 3-Cl | 4-Cl | 190-191 |
| 151 | 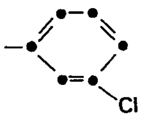 | $CH_3$ | 3-$Cf_3$ | H | 171-172 |
| 152 | 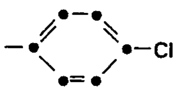 | $CH_3$ | 4-Cl | H | 220-221 |
| 153 | 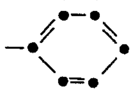 | 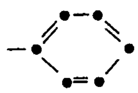 | 3-Cl | 4-Cl | |
| 154 | 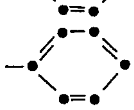 | 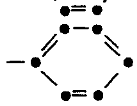 | 4-Cl | 2-Cl | |
| 155 | 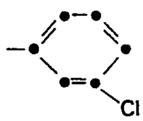 | $CH_3$ | 4-Br | H | |
| 156 | 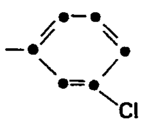 | $CH_3$ | 4-Cl | 2-Cl | |
| 157 | 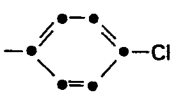 | $CH_3$ | 4-Br | H | |
| 158 | 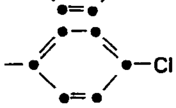 | $CH_3$ | 4-$CF_3$ | H | |
| 159 | 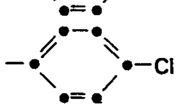 | $CH_3$ | 4-Cl | 3-Cl | |
| 160 | 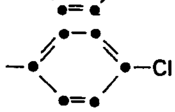 | $CH_3$ | 4-Cl | 2-Cl | |

Auch die beiden Verbindungen der Formel

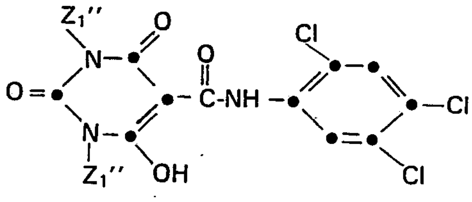

worin $Z_1''$ $CH_3$ oder $C_2H_5$ bedeutet, können in den genannten Formulierungen eingesetzt werden, ebenso wie die 5-Phenylcarbamoylthiobarbitursäuren der Formel

(B')

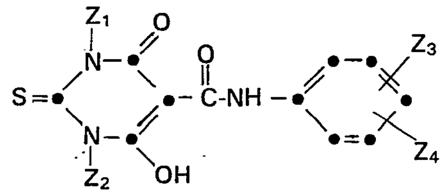

Tabelle 2

| Verbindung Nr. | $Z_1$ | $Z_2$ | $Z_3$ | $Z_4$ | Schmelzpunkt (°C) |
|---|---|---|---|---|---|
| 202 | $CH_3$ | $CH_3$ | 4-Cl | H | 243-245 |
| 203 | $CH_3$ | $CH_3$ | 4-Br | H | |
| 204 | $CH_3$ | $CH_3$ | 4-$CF_3$ | H | |
| 205 | $CH_3$ | $CH_3$ | 4-Cl | 3-Cl | |
| 206 | $CH_3$ | $CH_3$ | 4-Cl | 2-Cl | |
| 207 | $CH_3$ | $CH_3$ | 4-Cl | 3-$CF_3$ | |
| 208 | $CH_3$ | $CH_3$ | 4-$CF_3$ | 3-Cl | 185 |
| 209 | $CH_3$ | $CH_3$ | 3-$CF_3$ | H | |
| 210 | $CH_3$ | $CH_3$ | 3-$CF_3$ | 5-$CF_3$ | |
| 211 | $CH_3$ | $CH_3$ | 3-Cl | 5-Cl | |
| 212 | $C_2H_5$ | $C_2H_5$ | 4-Cl | H | |
| 213 | $C_2H_5$ | $C_2H_5$ | 4-Br | H | |
| 214 | $C_2H_5$ | $C_2H_5$ | 4-$CF_3$ | H | 162-165 (Triäthylammoniumsalz) |
| 215 | $C_2H_5$ | $C_2H_5$ | 4-Cl | 3-Cl | |
| 216 | $C_2H_5$ | $C_2H_5$ | 4-Cl | 2-Cl | |
| 217 | $C_2H_5$ | $C_2H_5$ | 4-Cl | 3-$CF_3$ | |
| 218 | $C_2H_5$ | $C_2H_5$ | 4-$CF_3$ | 3-Cl | |
| 219 | $C_2H_5$ | $C_2H_5$ | 3-$CF_3$ | H | |
| 220 | $C_2H_5$ | $C_2H_5$ | 3-$CF_3$ | 5-$CF_3$ | |
| 221 | $C_2H_5$ | $C_2H_5$ | 3-Cl | 5-Cl | |
| 222 | $CH_3$ | $C_2H_5$ | 4-Cl | H | |
| 223 | $CH_3$ | $C_2H_5$ | 4-Br | H | |
| 224 | $CH_3$ | $C_2H_5$ | 4-$CF_3$ | H | |
| 225 | $CH_3$ | $C_2H_5$ | 4-Cl | 3-$CF_3$ | |
| 226 | $CH_3$ | i-$C_3H_7$ | 4-Cl | H | |
| 227 | $CH_3$ | i-$C_3H_7$ | 4-Br | H | |
| 228 | $CH_3$ | i-$C_3H_7$ | 4-$CF_3$ | H | |
| 229 | $CH_3$ | i-$C_3H_7$ | 4-Cl | 3-$CF_3$ | |
| 230 | $C_2H_5$ | i-$C_3H_7$ | 4-Cl | H | |
| 231 | $C_2H_5$ | i-$C_3H_5$ | 4-Br | H | |
| 232 | $C_2H_5$ | i-$C_3H_7$ | 4-$CF_3$ | H | |
| 233 | $C_2H_5$ | i-$C_3H_7$ | 4-Cl | 3-$CF_3$ | |
| 234 | $CH_3$ | $CH_3$ | 4-$NO_2$ | 3-Cl | 224-225 |
| 235 | $CH_3$ | $CH_3$ | 4-Cl | 2-$CH_3$ | 206-207 |
| 236 | $CH_3$ | $C_2H_5$ | 4-Cl | 3-Cl | 150-154 |

*Beispiel 27*

In den gemäss Beispielen 1-26 erhaltenen Formulierungen kann Permethrin bzw. Cypermethrin auch durch ein Pyrethroid der allgemeinen Formel

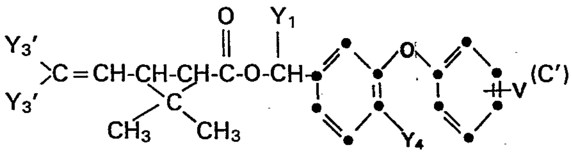

worin $Y_3'$ Brom, Chlor oder Methyl, V Wasserstoff, Chlor, Brom, Fluor, Methyl, Trifluormethyl oder Nitro, $Y_4$ Wasserstoff oder Fluor und $Y_1$ Methyl, Äthyl, Isopropyl, -C=CH, -C≡CH, -CH≡C-CH₃, -CH=
Br Br
=$CH_2$, -CH=CH-$CH_3$, -$CH_2$-CH=$CH_2$, -$CH_2$-CH==CHCl, -C≡C-$C_6H_5$ oder für den Fall, das V von Wasserstoff verschieden ist und/oder $Y_4$ für Fluor steht, auch Wasserstoff oder Cyano bedeuten, oder auch durch ein anderes von den in der DE-OS 2 936 457 auf den Seiten 48-61 aufgeführten Pyrethroiden ersetzt werden.

*Beispiel 28*

Färbung und gleichzeitige Motten- und Käferechtausrüstung:

Auf einem Färbeapparat wird ein Stück Wollgewebe in 600 g einer Färbeflotte, die aus

1,5 g der Formulierung gemäss Beispiel 4,
30,3 g Glaubersalz,
24,0 g Schwefelsäure conc.,
3,0 g eines roten Farbstoffes der Formel

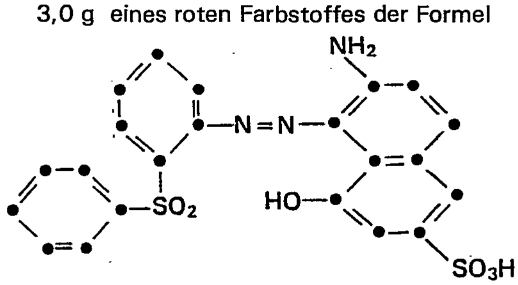

und

541,5 g entmineralisiertem Wasser

besteht, während 5 Minuten bei 40°C vorgenetzt (Flottenverhältnis 1 : 20). Die Flotte wird anschliessend innerhalb 45 Minuten auf ca. 98°C erhitzt. Nach einer einstündigen Behandlungsdauer bei dieser Temperatur wird das Wollgewebe gespült und getrocknet. Der Farbstoff und die beiden in der Formulierung von Beispiel 4 enthaltenen Wirkstoffe sind auf das Gewebe aufgezogen. Das rotgefärbte Wollgewebe ist nach dieser einbadigen Behandlung vollständig gegen Motten- und Käferlarvenfrass geschützt. Dies wurde durch Echtheitsprüfung gemäss SNV-Norm 195901 festgestellt.

In analoger Weise können die Formulierungen gemäss Beispielen 1-3 und 5-27 appliziert werden, wobei ähnlich gute Ausziehgrade und Schutzwirkungen gegen Larvenfrass der Keratinschädlinge erzielt werden.

*Beispiel 29*

Anwendung im Nachbehandlungsbad:

Auf einem Färbeapparat wird ein Stück Wollgewebe in 400 g einer Nachbehandlungsflotte, die aus

1 g der Formulierung gemäss Beispiel 4,
4 g Ameisensäure 85% und
395 g entmineralisiertem Wasser

besteht, während 5 Minuten bei 30°C vorgenetzt (Flottenverhältnis 1 : 20). Die Flotte wird dann innerhalb von 20 Minuten auf 45°C erwärmt. Nach einer 30 Minuten dauernden Behandlung bei dieser Temperatur, wobei das Wollgewebe unter ständiger Bewegung gehalten wird, wird letzteres in kaltem Wasser gut gespült und getrocknet. Das so behandelte Wollgewebe ist gegen die Larven von Wollschädlingen vollständig geschützt.

In analoger Weise können die Formulierungen gemäss Beispielen 1-3 und 5-27 appliziert werden, wobei ähnlich gute Ausziehgrade und Schutzwirkungen gegen Larvenfrass der Keratinschädlinge erzielt werden.

**Patentansprüche**

1. Lagerstabile Mottenschutzformulierung, enthaltend

A. 0,5-20 Gew.-% einer 5-Phenylcarbamoylbarbitursäureverbindung der allgemeinen Formel

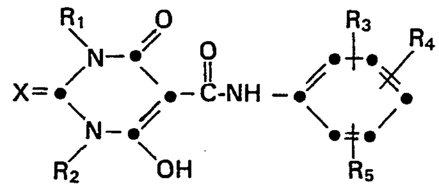 (1)

worin

X Sauerstoff oder Schwefel,
$R_1$ und $R_2$ unabhängig voneinander jeweils Alkyl mit 1 bis 4 C-Atomen, Alkenyl mit 3 oder 4 C-Atomen, Benzyl oder gegebenenfalls substituiertes Phenyl,
$R_3$ Halogen, Nitro oder -C(Halogen)$_3$,
$R_4$ Wasserstoff, Halogen oder -C(Halogen)$_3$ und
$R_5$ Wasserstoff, Halogen, Methyl oder Methoxy
bedeuten, oder deren tautomeren Formen und deren Salzen,

B. 0,5-20 Gew.-% eines synthetischen Pyrethroids der allgemeinen Formel

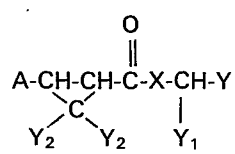 (2)

worin

A $Br_2C$=CBr-, (H, Cl)-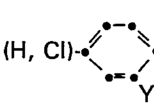-CH=CH-, Cl-C≡C-,
Cl-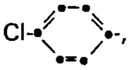-, $(CH_3)_3C$-O-, $Y_3$ >C=CH-, worin $Y_3$
$Y_3$

für Cl, Br, $CF_3$, F oder Methyl steht, $CH_2=CH$-$CH_2$-O- oder 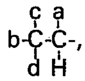, worin a, b, d und d unabhängig voneinander für Cl, Br oder F stehen, wobei c und d auch für Methyl stehen können,

X Sauerstoff oder Schwefel, $Y_1$ Wasserstoff, CN, $CH_3$, $C_2H_5$, i-$C_3H_7$, 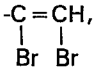, -C≡CH, -C≡C-$CH_3$, -C≡C-$C_6H_5$, -CH=CH-$CH_3$, -$CH_2$-CH=$CH_2$, -CH=$CH_2$ oder -$CH_2$-CH=CHCl,

$Y_2$ Methyl oder beide $Y_2$ zusammen die Ergänzung zu einem Cyclopropan-, Cyclobutan- oder Cyclopentanring und

Y 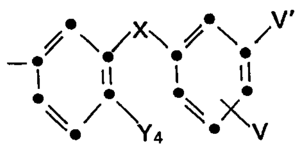

worin $Y_4$ für Wasserstoff oder Fluor, V für Wasserstoff, Cl, Br, F, $CH_3$ oder $NO_2$ oder V' für $CF_3$ steht, wenn V Wasserstoff bedeutet, und X wie oben definiert ist; ferner Y

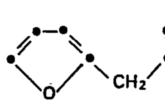, 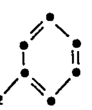, 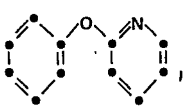, 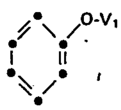,

worin $V_1$ für -$CH_2$-CH=$CH_2$, -$CH_2$-C≡CH, -$CH_2$-CH=CH-$CH_3$, -$CH_2$-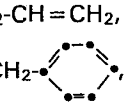, 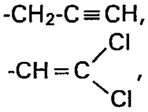, -CF==CFCl oder -CF=$CF_2$ steht; -CBr=CH-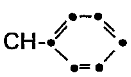 oder CH=CCl-$CH_2$-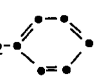 bedeuten,

C. 1-90 Gew.-% eines oder mehrerer aliphatischen(r), cycloaliphatischen(r) oder cyclischen(r) Amins(e) oder/und Amids(e) und deren Derivat(e), wobei nicht substituierte acyclische Amine und Amide mindestens einen Kohlenwasserstoffrest mit 8 bis 22 C-Atomen enthalten,

D. 0-80 Gew.-% eines oder mehrerer organischen(r) Lösungsmittel(s),

E. 0-40 Gew.-% Wasser, sofern ein organisches Lösungsmittel gemäss D vorhanden und es mit Wasser mischbar ist,

F. 0-30 Gew.-% eines oder mehrerer Tensids(e) und/oder Emulgators(en) bzw. Dispergators(en), die von der Komponente C verschieden sind, und

G. 0-10 Gew.-% einer oder mehrerer aliphatischen(r) Carbonsäure(n).

2. Formulierung nach Anspruch 1, worin als Komponente A eine 5-Phenylcarbamoylbarbitursäure der Formel

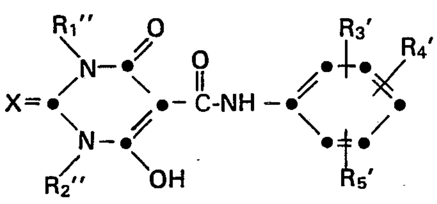

(3)

sowie deren tautomere Formen und Salze, worin

X Sauerstoff oder Schwefel,

$R_1''$ und $R_2''$ unabhängig voneinander jeweils Methyl, Äthyl, Allyl oder eine Gruppe der Formel

$Z_1'$

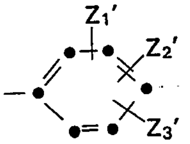

worin

$Z_1'$ für Wasserstoff, Chlor, Brom, Methyl, Methoxy, Äthoxy, -$CF_3$ oder Nitro,

$Z_2'$ für Wasserstoff, Chlor, Brom, Methyl oder -$CF_3$ und

$Z_3'$ für Wasserstoff, Chlor oder Methyl stehen,

$R_3'$ Chlor, Brom oder -$CF_3$,

$R_4'$ Wasserstoff, Chlor oder Brom und

$R_5'$ Wasserstoff, Chlor, Brom, Methyl oder Methoxy bedeuten, verwendet wird.

3. Formulierung nach Anspruch 2, worin als Komponente A eine 5-Phenylcarbamoylbarbitursäure der Formel (3) verwendet wird, worin $R_1''$ und $R_2''$ gleich sind und vorzugsweise für Methyl stehen, X Sauerstoff, $R_3'$ Trifluormethyl, Chlor oder Brom, $R_4'$ Chlor oder Wasserstoff und $R_5'$ Wasserstoff bedeuten.

4. Formulierung nach Anspruch 1, worin als Komponente (B) ein synthetisches Pyrethroid der Formel

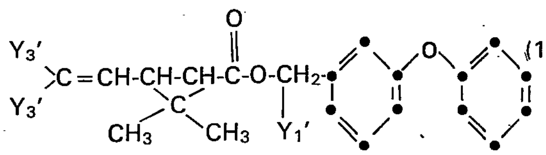

(12)

verwendet wird, worin $Y_1'$ Wasserstoff, Cyano, Methyl, -CH=$CH_2$ oder -C≡CH und $Y_3'$ Brom, Chlor oder Methyl bedeuten.

5. Formulierung nach Anspruch 1, worin als Komponente C eine oder mehrere Verbindungen aus folgenden Klassen eingesetzt werden: primäre, sekundäre oder tertiäre Fettamine oder Fettaminoxide, quaternierte Fettamine, Fettsäureamide, alkoxylierte Fettsäureamide, Aminoalkohole und alkoxylierte Aminoalkohole, cyclische und acyclische Amine, die einen Kohlenwasserstoffrest mit 8-22 C-Atomen enthalten, alkoxylierte Fettsäurealkylolamide, Alkylpropylen-diamine und alkoxylierte primäre, sekundäre, tertiäre und quaternierte Fettamine sowie deren Ester mit anorganischen Säuren.

6. Formulierung nach Anspruch 5, worin als Komponente C eine oder mehrere Verbindungen aus folgenden Klassen eingesetzt werden: primäre, sekundäre oder tertiäre Fettamine oder Aminoxide, quaternierte Fettamine, cyclische Amine, die durch einen Kohlenwasserstoffrest mit 10-20 C-Atomen substituiert sind, und alkoxylierte primäre, sekundäre oder tertiäre Fettamine und deren Ester mit Schwefelsäure oder Phosphorsäure, insbesondere solche der Formel

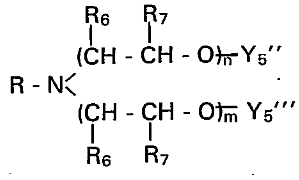

(8)

worin R einen $C_8$-$C_{22}$-Alkyl- oder Alkenylrest, $R_6$ und $R_7$ unabhängig voneinander Wasserstoff oder eine Methylgruppe, die Summe n + m eine Zahl zwischen 2 und 50, insbesondere zwischen 2 und 30 und $Y_5''$ und $Y_5'''$ unabhängig voneinander Wasserstoff oder die Gruppe -$SO_3M$ bedeuten, wobei M für Wasserstoff, ein Alkalimetall- oder Ammoniumion steht, sowie solche der Formel

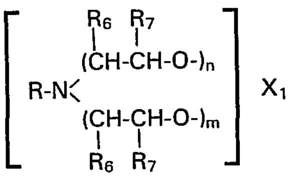
(9)

oder deren Alkalimetall-, Ammonium- oder Aminsalze einsetzt, worin R, $R_6$ und $R_7$ wie in Formel (8) definiert sind und $X_1$ den Säurerest der Phosphorsäure darstellt, wobei die sauren Wasserstoffatome dieses Restes durch Alkalimetall-, Ammonium- oder Aminsalzionen ersetzt sein können.

7. Formulierung nach Anspruch 1, worin als Komponente D ein oder mehrere organische Lösungsmittel aus folgenden Klassen eingesetzt werden: aliphatische, cycloaliphatische oder aromatische Kohlenwasserstoffe, aliphatische und alicyclische mono- oder polyfunktionelle Alkohole, cyclische oder acyclische Ketone, chlorierte und fluorierte aliphatische oder aromatische Kohlenwasserstoffe, Äther, Formamid, Dimethylformamid, Dimethylmethanphosphonat, N-Methylpyrrolidon, Glykoläther, Polyäthylenglykole, Äthylenglykolmonoalkyläther, Di- oder Triäthylenglykolalkyläther, Äthylpolyglykol, Polydiole und Pflanzenöle, vorzugsweise Dimethylmethanphosphonat, Acetoxy-2-äthoxy-äthan, N-Methylpyrrolidon, Äthylenglykol, Mono-, Di-, Tri- und Polyäthylenglykoläthyläther und Mischungen davon, z.B. Äthylpolyglykol, Isoparaffine, Isophoron, Benzol, Xylol, Toluol, Naphtha, Polydiole und Pine Oil oder Mischungen von solchen Lösungsmitteln.

8. Formulierung nach Anspruch 1, worin als Komponente F eine oder mehrere Substanzen aus den folgenden Klassen eingesetzt werden: Blockpolymere aus Propylenglykol und Äthylenoxid, Polyglykoläther höherer Fettalkohole, äthoxylierte Alkylphenole und deren Ester mit Säuren, z.B. die entsprechenden Sulfate und Phosphate, äthoxylierte Fettalkohole, äthoxylierte cyclische Alkohole, Alkylphosphorsäurepartialester, N,N-Dialkylaminocarbonsäuren und Polyäthylenglykol.

9. Formulierung nach Anspruch 1, worin als Komponente G eine gesättigte oder ungesättigte Monocarbonsäure, Dicarbonsäure oder Hydroxymono- oder -dicarbonsäure oder Mischungen von solchen Säuren, vorzugsweise Ameisensäure, Essigsäure, propionsäure, Buttersäure, Valeriansäure und längerkettige Monocarbonsäuren, Oxalsäure, Malonsäure, Maleinsäure, Fumarsäure, Glutarsäure, Adipinsäure, Weinsäure, Äpfelsäure, Citronensäure, Bernsteinsäure oder Milchsäure, eingesetzt werden.

10. Formulierung nach einem der Ansprüche 1-9, enthaltend

A. 1-15% einer 5-Phenylcarbamoylbarbitursäure der Formel (3), insbesondere einer solchen, worin X Sauerstoff, $R_3'$ $CF_3$, Cl oder Br, $R_4'$ Cl oder Wasserstoff und $R_5'$ Wasserstoff bedeuten und $R_1''$ und $R_2''$ gleich sind,

B. 1-15% eines synthetischen Pyrethroids der Formel (12),

C. 5-60% eines primären, sekundären oder tertiären Fettamins oder Fettaminoxids, eines gegebenenfalls äthoxylierten Fettsäureamids, eines quaternären Fettamins, eines cyclischen Amins, das mit einer Alkyl- oder Alkenylgruppe mit 8-22 C-Atomen substituiert ist, eines äthoxylierten Fettsäurealkylolamids, eines Alkylpropylendiamins, eines äthoxylierten Aminoalkohols oder eines äthoxylierten primären, sekundären, tertiären oder quaternären Fettamins oder einer Mischung mehrerer der vorgenannten stickstoffhaltigen Verbindungen,

D. 15-75% eines oder mehrerer organischer(n) Lösungsmitteln(s),

E. 0-40% Wasser, sofern Komponente D ein mit Wasser mischbares organisches Lösungsmittel ist,

F. 0-15% eines Tensids und/oder Emulgators oder Dispergators oder einer Mischung aus mehreren solchen Substanzen und

G. 0-5% einer gesättigten oder ungesättigten Mono- oder Dicarbonsäure, oder einer Hydroxymono- oder -dicarbonsäure.

11. Formulierung nach einem der Ansprüche 1-10, dadurch gekennzeichnet, dass sie zusätzlich Piperonylbutoxid enthält.

12. Verfahren zum Schützen von Keratinmaterial, insbesondere von Wolltextilien, gegen den Befall durch keratinfressende Schädlinge, dadurch gekennzeichnet, dass man aus einem Teil einer Formulierung gemäss Anspruch 1 durch Verdünnung eine Applikationsflotte bereitet, der gegebenenfalls noch übliche Textilhilfsmittel oder/und Farbstoffe zugefügt werden können und mit dieser Flotte das zu schützende Material imprägniert.

13. Verfahren nach Anspruch 12, dadurch gekennzeichnet, dass man Wolltextilien mit der erhaltenen Flotte nach dem Ausziehverfahren oder nach dem Foulardverfahren behandelt.

14. Verfahren nach Anspruch 13, dadurch gekennzeichnet, dass man die Wolltextilien im Nachbehandlungsbad nach dem Ausziehverfahren behandelt.

15. Verwendung der Formulierung gemäss Anspruch 1 zum Schützen von Keratinmaterial, insbesondere Wolltextilien, gegen den Befall durch keratinfressende Schädlinge.

**Claims**

1. A storage stable mothproofing formulation which contains

A. 0.5 to 20% by weight of a 5-phenylcarbamoylbarbituric acid compound of the general formula

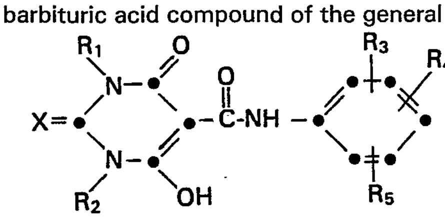
(1)

wherein

X is oxygen or sulfur,

$R_1$ and $R_2$ are each independently of the other alkyl of 1 to 4 carbon atoms, alkenyl of 3 or 4 carbon atoms, benzyl, phenyl or substituted phenyl,

$R_3$ is halogen, nitro or trihalomethyl,

$R_4$ is hydrogen, halogen or trihalomethyl, and

$R_5$ is hydrogen, halogen, methyl or methoxy,

or a tautomer or salt thereof,

B. 0.5 to 20% by weight of a synthetic pyrethroid of the general formula

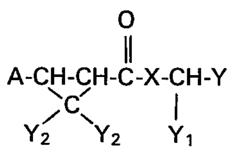 (2)

wherein

A is $Br_2C=CBr-$, (H, Cl)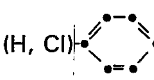-CH=CH-, Cl-C≡≡C-, Cl-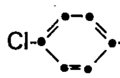-, $(CH_3)_3C-O-$, 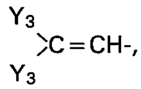 wherein $Y_3$ is Cl, Br, $CF_3$, F or methyl, $CH_2=CH-CH_2-O-$ or 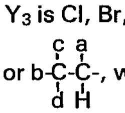, wherein a, b, c and d are each independently Cl, Br or F, and c and d may also be methyl,

X is oxygen or sulfur, $Y_1$ is hydrogen, CN, $CH_3$, $C_2H_5$, i-$C_3H_7$, 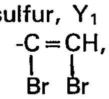, $-C\equiv CH$, $-C\equiv C-CH_3$, $-C\equiv C-C_6H_5$, $-CH=CH-CH_3$, $-CH_2-CH=CH_2$, $-CH=CH_2$ er $-CH_2-CH=CHCl$, $Y_2$ is methyl or both $Y_2$'s together complete a cyclopropane, cyclobutane or cyclopentane ring, and

Y is 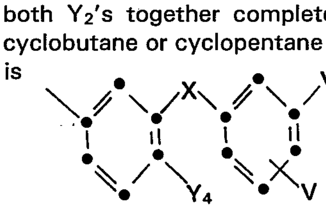

wherein $Y_4$ is hydrogen or fluorine and V is hydrogen, Cl, Br, F; $CH_3$ or $NO_2$ or V' may be $CF_3$ if V is hydrogen, and X is as defined above; and Y is also

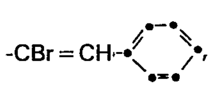, 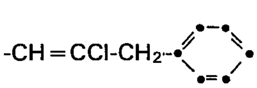,

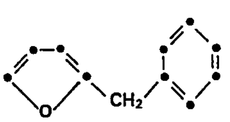, 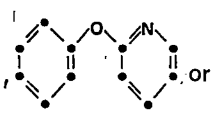 or 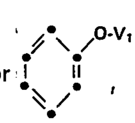,

wherein $V_1$ is $-CH_2-CH=CH_2$, $-CH_2CH\equiv CH$, $-CH_2-CH=CH-CH_3$, 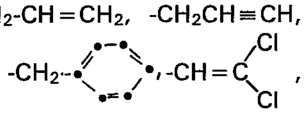,

$-CF=CFCl$ or $-CF=CF_2$,

C. 1 to 90% by weight of one or more aliphatic, cycloaliphatic or cyclic amines and/or amides, or derivatives thereof, with unsubstituted acyclic amines and amides containing at least one $C_8$-$C_{22}$ hydrocarbon radical,

D. 0 to 80% by weight of one or more organic solvents,

E. 0 to 40% by weight of water, provided an organic solvent D is present and is miscible with water,

F. 0 to 30% by weight of one or more surfactants and/or emulsifiers or dispersants which differ from component C, and

G. 0 to 10% by weight of one or more aliphatic carboxylic acids.

2. A formulation according to claim 1, wherein component A is a 5-phenylcarbamoylbarbituric acid derivative of the formula

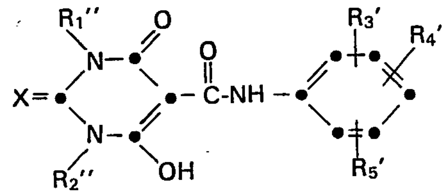 (3)

wherein

X is oxygen or sulfur,

$R_1''$ and $R_2''$ are each independently of the other methyl, ethyl, allyl or a group of the formula

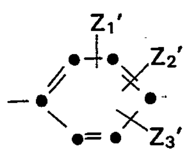

wherein

Z' is hydrogen, chlorine, bromine, methyl, methoxy, ethoxy, $-CF_3$ or nitro,

$Z_2'$ is hydrogen, chlorine, bromine, methyl or $-CF_3$,

$Z_3'$ is hydrogen, chlorine or methyl,

$R_3'$ is chlorine, bromine or $-CF_3$,

$R_4'$ is hydrogen, chlorine or bromine, and

$R_5'$ is hydrogen, chlorine, bromine, methyl or methoxy,

or a tautomer or salt thereof.

3. A formulation according to claim 2, wherein component A is a 5-phenylcarbamoylbarbituric acid of the formula (3), wherein $R_1''$ and $R_2''$ are the same and are preferably methyl, X is oxygen, $R_3'$ is trifluoromethyl, chlorine or bromine, $R_4'$ is chlorine or hydrogen and $R_5'$ is hydrogen.

4. A formulation according to claim 1, wherein component B is a synthetic pyrethroid of the formula

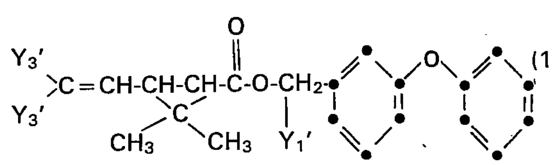 (12)

wherein $Y_1'$ is hydrogen, cyano, methyl, $-CH=CH_2$- or $-CH\equiv CH$, and $Y_3'$ is bromine, chlorine or methyl.

5. A formulation according to claim 1, wherein component C may comprise one or more compounds selected from the following classes: primary, secondary or tertiary fatty amines or fatty amine oxides, quaternised fatty amines, fatty acid amides, alkoxylated fatty axid amides, amino alcohols and alkoxylated amino alcohols, cyclic and acyclic amines which contain a hydrocarbon radical of 8 to 22 carbon atoms, alkoxylated fatty acid alkylolamides, alkylpropylendiamines and alkoxylated primary, secondary, tertiary and quaternised fatty amines and esters thereof with inorganic acids.

6. A formulation according to claim 5, wherein component C may comprise one or more compounds of the following classes: primary, secondary or tertiary fatty amines or amine oxides, quaternised fatty amines, cyclic amines which are substituted by a hydrocarbon radical of 10 to 20 carbon atoms, and alkoxylated primary, secondary or tertiary fatty amines and esters thereof with sulfuric acid or phosphoric acid, in particular those of the formula

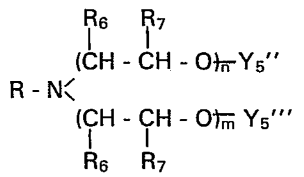

(8)

wherein R is a $C_8$-$C_{22}$alkyl or $C_8$-$C_{22}$alkenyl radical, each of $R_6$ and $R_7$ independently of the other is hydrogen or a methyl group, the sum of n + m is an integer from 2 to 50, in particular from 2 to 30, and each of $Y_5''$ and $Y_5'''$ independently of the other is hydrogen or the $-SO_3M$ group, in which M is hydrogen or an alkali metal ion or ammonium ion, and also those of the formula

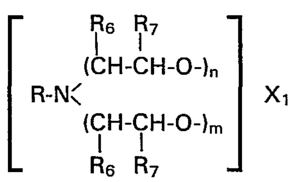

(9)

or the alkali metal salts, ammonium salts or amine salts thereof, wherein R, $R_6$ and $R_7$ are as defined for formula (8) and $X_1$ is the acid radical of phosphoric acid, the acid hydrogen atoms of which radical may be replaced by alkali metal ions, ammonium ions or amine salt ions.

7. A formulation according to claim 1, wherein component D may comprise one or more organic solvents of the following classes: aliphatic, cycloaliphatic or aromatic hydrocarbons, aliphatic and alicyclic mono- or polyfunctional alcohols, cyclic or acyclic ketones, chlorinated and fluorinated aliphatic or aromatic hydrocarbons, ethers, formamide, dimethyl formamide, dimethyl methanephosphonate, N-methylpyrrolidone, glycol ethers, polyethylene glycols, ethylene glycol monoalkyl ethers, di- or triethylene glycol alkyl ethers, ethyl polyglycol, polydiols and vegetable oils, preferably dimethyl methanephosphonate, acetoxy-2-ethoxyethane, N-methylpyrrolidone, ethylene glycol, mono-, di-, tri-, or polyethylene glycol ethyl ethers or a mixture thereof, e.g. ethyl polyglycol, isoparaffin, isophoron, benzene, xylene, toluene, naphtha, a polydiol and pine oil or a mixture of such solvents.

8. A formulation according to claim 1, wherein component F may comprise one or more compounds of the following classes: block polymers of propylene glycol and ethylene oxide, polyglycol ethers of higher fatty alcohols, ethoxylated alkylphenols and esters thereof with acids, e.g. the corresponding sulfates and phosphates, ethoxylated fatty alcohols, ethoxylated cyclic alcohols, alkylphosphoric acid partial esters, N,N-dialkylaminocarboxylic acids and polyethylene glycol.

9. A formulation according to claim 1, wherein component G is a saturated or unsaturated monocarboxylic acid, dicarboxylic acid or hydroxymono- or hydroxydicarboxylic acid or a mixture of such acids, preferably formic acid, acetic acid, propionic acid, butyric acid, valeric acid and long chain monocarboxylic acids, oxalic acid, malonic acid, maleic acid, fumaric acid, glutaric acid, adipic acid, tartaric acid, malic acid, citric acid, succinic acid or lactic acid.

10. A formulation according to any one of claims 1 to 9, which comprises

A. 1 to 15% of a 5-phenylcarbamoylbarbituric acid of the formula (3), preferably one in which X is oxygen, $R_3'$ is $CF_3$, Cl or Br, $R_4'$ is Cl or hydrogen, $R_5'$ is hydrogen and $R_1''$ and $R_2''$ are the same,
B. 1 to 15% of a synthetic pyrethroid of the formula (12),
C. 5 to 60% of a primary, secondary or tertiary fatty amine or fatty amine oxide, of a free or ethoxylated fatty acid amide, of a quaternary fatty amine, of a cyclic amine which is substituted by a $C_8$-$C_{22}$alkyl or $C_8$-$C_{22}$alkenyl group, of an ethoxylated fatty acid alkylolamide, of an alkylpropylenediamine, of an ethoxylated amino alcohol or of an ethoxylated primary, secondary, tertiary or quaternary fatty amine, or of a mixture of several of the above nitrogen-containing compounds,
D. 15 to 75% of one or more organic solvents,
E. 0 to 40% of water, provided component D is a water-miscible organic solvent,
F. 0 to 15% of a surfactant and/or emulsifier or dispersant or of a mixture of several such compounds, and
G. 0 to 5% of a saturated or unsaturated mono- or dicarboxylic acid or hydroxymono- or hydroxydicarboxylic acid.

11. A formulation according to any one of claims 1 to 10, which additionally contains piperonyl butoxide.

12. A method of protecting keratinous material, in particular wool textiles, from attack by pests that feed on keratin, which method comprises preparing a treatment bath by diluting an amount of a formulation as claimed in claim 1, to which bath there may be added further conventional textile auxiliaries and/or dyes, and impregnating the material to be protected with said bath.

13. A method according to claim 12, wherein wool textiles are treated with the bath by the exhaust process or by the pad process.

14. A method according to claim 13, wherein the wool textiles are treated in the aftertreatment bath by the exhaust process.

15. Use of a formulation according to claim 1 for protecting keratinous material, in particular wool textiles, from attack by pests that feed on keratin.

**Revendications**

1. Formulation antimite stable au stockage, contenant

A. 0,5-20% en poids d'un composé acide 5-phénylcarbamylbarbiturique de formule générale

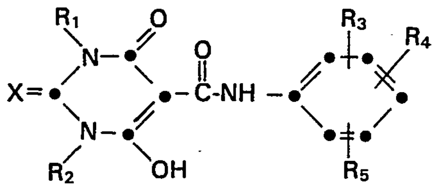

(1)

dans laquelle

X est un atome d'oxygène ou de soufre;

$R_1$ et $R_2$ représentent chacun, indépendamment l'un de l'autre, un radical alkyle ayant de 1 à 4 atomes de carbone, alcényle ayant 3 ou 4 atomes de carbone, benzyle ou phényle éventuellement substitué;

$R_3$ représente un groupe halogéno, nitro ou -C(halogène)$_3$;

$R_4$ est un atome d'hydrogène, d'halogène ou un groupe -C(halogène)$_3$, et

$R_5$ représente un atome d'hydrogène, un groupe halogéno, méthyle ou méthoxy,

ou ses formes tautomères et ses sels,

B. 0,5-20% en poids d'un composant synthétique de type pyréthrine de formule générale

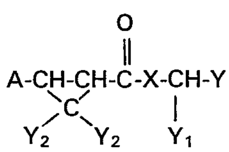

(2)

dans laquelle

A représente $Br_2C=CBr-$, (H, Cl)-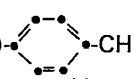-CH=CH-, Y3

$Cl-C\equiv C-$, Cl-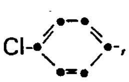-, $(CH_3)_3C-O-$, >C=CH-, Y3

où $Y_3$ représente Cl, Br, $CF_3$, F ou un groupe méthyle, $CH_2=CH-CH_2-O-$ ou 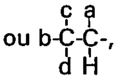, où a, b, c et d représentent, indépendamment les uns des autres, Cl, Br ou F, c et d pouvant aussi représenter chacun un groupe méthyle;

X est un atome d'oxygène ou de soufre;

$Y_1$ représente un atome d'hydrogène, CN, $CH_3$, $C_2H_5$, $i-C_3H_7$, 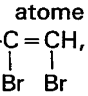, $-C\equiv CH$, $-C\equiv C-CH_3$, $-C\equiv C-C_6H_5$, $-CH=CH-CH_3$, $-CH_2-CH=CH_2$, $-CH=CH_2$ ou $-CH_2-CH=CHCl$,

$Y_2$ représente un radical méthyle ou bien les deux radicaux $Y_2$ représentent ensemble le complément d'un noyau cyclopropane, cyclobutane ou cyclopentane et

Y représente

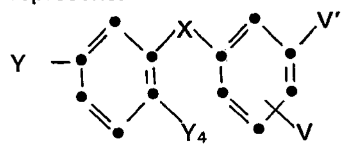

où $Y_4$ représente un atome d'hydrogène ou de fluor; V représente un atome d'hydrogène, Cl, Br, F, $CH_3$ ou $NO_2$, ou bien V' représente $CF_3$ lorsque V est un atome d'hydrogène, et X a la même définition que plus haut; en outre Y représente

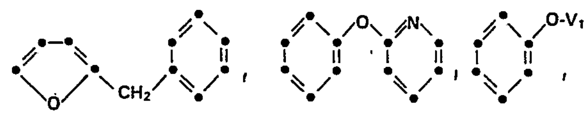

où $V_1$ représente $-CH_2-CH=CH_2$, $-CH_2-C\equiv CH$, $-CH_2-CH=CH-CH_3$, $-CH_2-$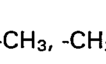, 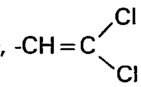,

$-CF=CFCl$ ou $-CF=CF_2$, $-CBr=CH-$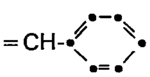 ou

$CH=CCl-CH_2-$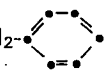

C. 1-90% en poids d'une ou de plusieurs amine(s) et/ou d'un ou de plusieurs amide(s) aliphatique(s), cyclo-aliphatique(s) ou cyclique(s) et leur(s) dérivés(s), les amines et amides acyliques non substitués contenant au moins un résidu hydrocarboné ayant de 8 à 22 atomes de carbone,

D. 0-80% en poids d'un ou de plusieurs solvant(s) organique(s),

E. 0-40% en poids d'eau, dans la mesure où un solvant organique selon D est présent et miscible à l'eau,

F. 0-30% en poids d'un ou de plusieurs agent(s) tensio-actif(s) et/ou émulsifiant(s) ou agent(s) dispersant(s), qui sont différents du composant C et

G. 0-10% en poids d'un ou de plusieurs acide(s) carboxylique(s) aliphatique(s).

2. Formulation selon la revendication 1, dans laquelle on utilise en tant que composant A un acide 5-phénylcarbamylbarbiturique de formule

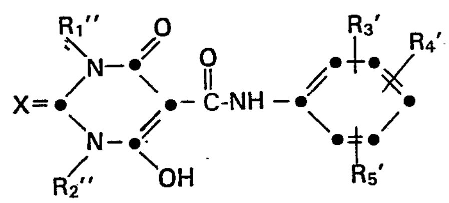

(3)

ainsi que ses formes tautomères et ses sels, dans lequel

X est un atome d'oxygène ou de soufre,

$R_1''$ et $R_2''$ représentent chacun, indépendamment l'un de l'autre, un groupe méthyle, éthyle, allyle ou un groupe de formule

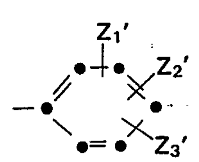

dans laquelle

$Z_1'$ représente un atome d'hydrogène, de chlore, de brome, un groupe méthyle, méthoxy, éthoxy, $-CF_3$ ou nitro,

$Z_2'$ représente un atome d'hydrogène, de chlore, de brome, un groupe méthyle ou $-CF_3$ et

$Z_3'$ représente un atome d'hydrogène, de chlore ou un groupe méthyle,

$R_3'$ représente un atome de chlore, de brome ou $-CF_3$,

$R_4'$ représente un atome d'hydrogène, de chlore ou de brome, et

$R_5'$ représente un atome d'hydrogène, de chlore, de brome ou un groupe méthyle ou méthoxy.

3. Formulation selon la revendication 2, dans laquelle on utilise en tant que composant A un acide 5-phénylcarbamylbarbiturique de formule (3), dans lequel $R_1''$ et $R_2''$ sont identiques et représentent préférablement chacun un groupe méthyle; X est un atome d'oxygène; $R_3'$ représente un groupe trifluorométhyle, chloro ou bromo; $R_4'$ est un atome de chlore ou d'hydrogène, et $R_5'$ est un atome d'hydrogène.

4. Formulation selon la revendication 1, dans laquelle on utilise en tant que composant B und composé synthétique de type pyréthrine de formule

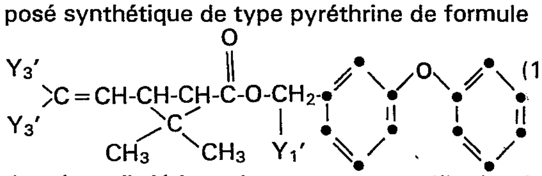
(12)

dans laquelle $Y_1'$ représente un atome d'hydrogène, un groupe cyano, méthyle, $-CH=CH_2$ ou $C\equiv CH$, et $Y_3'$ représente un atome de brome, de chlore ou un groupe méthyle.

5. Formulation selon la revendication 1, dans laquelle on utilise en tant que composant C un ou plusieurs composés appartenant aux catégories suivantes: amines grasses ou oxydes d'amines grasses primaires, secondaires ou tertiaires, amines grasses quaternaires, amides d'acides gras, amides d'acides gras alcoxylés, amino-alcools et amino-alcools alcoxylés, amines cycliques et acycliques qui contiennent un résidu hydrocarboné ayant de 8 à 22 atomes de carbone, alkylolamides d'acides gras alcoxylés, alkyl-propylènediamines et amines grasses primaires, secondaires, tertiaires et quaternaires alcoxylées ainsi que leurs esters avec des acides organiques.

6. Formulation selon la revendication 5, dans laquelle on utilise en tant que composant C un ou plusieurs composés pris dans les catégories suivantes: amines grasses ou oxydes d'amines primaires, secondaires ou tertiaires, amines grasses quaternaires, amines cycliques, qui sont substituées par un résidu hydrocarboné ayant 10-20 atomes de carbone, et amines grasses alcoxylées primaires, secondaires et tertiaires et leurs esters avec l'acide sulfurique ou l'acide phosphorique, en particulier ceux de formule

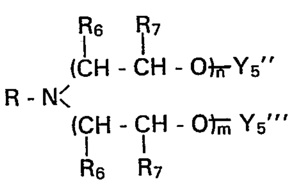
(8)

dans laquelle R représente un résidu alkyle ou alcényle en $C_8$-$C_{22}$, $R_6$ et $R_7$ représentent chacun indépendamment l'un de l'autre un atome d'hydrogène ou un radical méthyle, la somme n+m est un nombre compris entre 2 et 50, en particulier entre 2 et 30, et $Y_5''$ et $Y_5''$ représentent chacun, indépendamment l'un de l'autre, un atome d'hydrogène ou le groupe $-SO_3M$, M étant un atome d'hydrogène, un ion métal alcalin ou l'ion ammonium, de même que l'on utilise ceux de formule

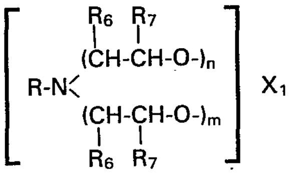
(9)

ou leurs sels de métaux alcalins, d'ammonium ou d'amines, dans lesquels R, $R_6$ et $R_7$ ont les mêmes définitions que dans la formule (8), et $X_1$ représente le résidu acide de l'acide phosphorique, l'atome d'hydrogène acide de ce résidu pouvant être remplacé par des ions métal alcalin, ammonium ou sel d'amine.

7. Formulation selon la revendication 1, dans laquelle on utilise en tant que composant D un ou plusieurs solvants organiques pris dans les catégories suivantes: hydrocarbures aliphatiques, cyclo-aliphatiques ou aromatiques, alcools aliphatiques et alicycliques à une ou plusieurs fonctions alcool, cétones cycliques ou acycliques, hydrocarbures aliphatiques ou aromatiques chlorés et fluorés, éthers, formamide, diméthylformamide, diméthylméthanephosphonate, N-méthylpyrrolidone, éthers de glycol, polyéthylèneglycols, éthers mono-alkyliques d'éthylèneglycol, éthers alkyliques du di- ou du triéthylèneglycol, éthylpolyglycol, polydiols et huiles végétales, préférablement le diméthylméthanephosphonate, l'acétoxy-2-éthoxy-éthane, la N-méthylpyrrolidone, l'éthylèneglycol, les éthers éthyliques du mono-, du di-, du tri- et du polyéthylèneglycol et des mélanges de ceux-ci, par exemple, l'éthylpolyglycol, des isoparaffines, l'isoophorone, le benzène, le xylène, le toluène, le naphta, des polydiols et l'essence de pin ou des mélanges de tels solvants.

8. Formulation selon la revendication 1, dans laquelle on utilise en tant que composant F une ou plusieurs substances appartenant aux catégories suivantes: bloc-polymères constitués à partir de polyéthylèneglycol et d'oxyde d'éthylène, éthers de polyglycol et d'alcools gras supérieurs, alkylphénols oxy-éthylés et leurs esters avec des acides, par exemples les sulfates et phosphates correspondants, alcools gras oxy-éthylés, alcools cycliques oxy-éthylés, esters partiels d'acide alkylphosphorique, acides N,N-dialkylaminocarboxyliques et polyéthylèneglycol.

9. Formulation selon la revendication 1, dans laquelle on utilise en tant que composant G un acide monocarboxylique saturé ou non saturé, un acide dicarboxylique ou un acide hydroxymono- ou -dicarboxylique ou des mélanges de tels acides, préférablement l'acide formique, l'acide acétique, l'acide

propionique, l'acide butyrique, l'acide valérianique et des acides monocarboxyliques à longues chaînes, les acides oxalique, malonique, maléique, fumarique, glutarique, adipique, tartrique, malique, citrique, succinique ou lactique.

10. Formulation selon l'une des revendications 1 à 9, contenant

A. 1-15% d'un acide 5-phénylcarbamylbarbiturique de formule (3), en particulier un tel acide dans lequel X est un atome d'oxygène; $R_3'$ est $CF_3$, Cl ou Br; $R_4'$ est Cl ou un atome d'hydrogène; $R_5'$ est un atome d'hydrogène, et $R_1''$ et $R_2''$ sont identiques,
B. 1-15% d'un composé synthétique de type pyréthrine de formule (12),
C. 5-60% d'une amine grasse ou d'un oxyde d'amine grasse primaire, secondaire ou tertiaire, d'un amide d'acide gras éventuellement oxy-éthylé, d'une amine grasse quaternaire, d'une amine cyclique, qui est substituée par un groupe alkyle ou alcényle ayant de 8 à 22 atomes de carbone, d'un alkylolamide d'acide gras oxy-éthylé, d'une alkyl-propylènediamine, d'un amino-alcool oxy-éthylé ou d'une amine grasse primaire, secondaire, tertiaire ou quaternaire oxy-éthylée ou d'un mélange de plusieurs des composés azotés précités,
D. 15-75% d'un ou de plusieurs solvant(s) organique(s),
E. 0-40% d'eau, dans la mesure où le composant D est un solvant organique miscible à l'eau,
F. 0-15% d'un agent tensio-actif et/ou d'un émulsifiant ou d'un agent dispersant ou bien d'un mélange de plusieurs de ces substances, et
G. 0-5% d'un acide mono- ou dicarboxylique ou d'un acide hydroxymono- ou -dicarboxylique saturé ou non saturé.

11. Formulation selon l'une des revendications 1 à 10, caractérisée par le fait qu'elle contient en plus le pipéronylbutoxyde.

12. Procédé pour la protection de matériau de kératine, en particulier de textiles de laine, contre l'attaque par des parasites se nourrissant de kératine, caractérisé par le fait que, à partir d'une fraction d'une formulation selon la revendication 1, on prépare par dilution un bain d'application auquel on peut éventuellement ajouter encore des produits auxiliaires pour textiles et/ou des colorants usuels et que l'on imprègne de ce bain le matériau à protéger.

13. Procédé selon la revendication 12, caractérisé par le fait que l'on traite des textiles de laine avec le bain obtenu suivant le procédé par épuisement ou suivant le procédé au foulard.

14. Procédé selon la revendication 13, caractérisé par le fait que l'on traite les textiles de laine dans le bain de post-traitement suivant le procédé par épuisement.

15. Utilisation de la formulation selon la revendication 1 pour la protection de matériau de kératine, en particulier de textiles de laine, contre l'attaque par des parasites se nourrissant de kératine.